# EUROPEAN PATENT APPLICATION

(11) **EP 4 775 358 A1**
(43) Date of publication of application: **15.07.2026**
(21) Application number: 24875932.6
(22) Date of filing: 15.03.2024
(51) Int. Cl.: B25J 9/16, B65G 47/90

(54) **BATTERY CELL GRIPPING SYSTEM, CONTROL METHOD THEREOF, AND PRODUCTION LINE MODULE**

(30) Priority: 13.10.2023 CN 202311323973
(71) Applicant: Contemporary Amperex Technology Co., Limited, Ningde, Fujian 352100 (CN)
(72) Inventor: WU, Kai, Ningde, Fujian 352100 (CN); LUO, Jian, Ningde, Fujian 352100 (CN); LIAO, Shunlin, Ningde, Fujian 352100 (CN); WU, Ying, Ningde, Fujian 352100 (CN)
(74) Representative: Kraus & Lederer PartGmbB
(86) International application number: PCT/CN2024/082009
(87) International publication number: WO 2025/077103

(57) **Abstract**

Disclosed in the present disclosure are a cell gripping system, a control method therefor, and a production line module. The control method includes: sending, by a robot, a first photographing request to a stand camera; obtaining, by the stand camera in response to the first photographing request, first image data containing to-be-gripped cells, and determining a gripping position for a target column of cells among the to-be-gripped cells and a photographing position for the target column of cells; moving, by the robot, to the photographing position and sending a second photographing request to a gripper camera, to obtain second image data; determining, based on the second image data, arrangement parameters for the target column of cells, and sending the arrangement parameters to the robot; and moving, by the robot, to the gripping position, adjusting a gripping angle based on the arrangement parameters, and controlling a cell gripping apparatus to firmly clamp the target column of cells, to complete gripping.

## Description

### CROSS-REFERENCE TO RELATED APPLICATIONS

The present disclosure claims priority to Chinese Patent Application No. 202311323973.4, filed with the China National Intellectual Property Administration on October 13, 2023 and entitled "CELL GRIPPING SYSTEM, CONTROL METHOD THEREFOR, AND PRODUCTION LINE MODULE", which is incorporated herein by reference in its entirety.

### TECHNICAL FIELD

The present disclosure relates to cell gripping technologies, and in particular, to a cell gripping system, a control method therefor, and a production line module.

### BACKGROUND

New energy batteries are more widely applied in life and industry. For example, new energy automobiles carrying batteries have been widely used. In addition, the batteries are further more and more applied to the energy storage field and the like.

Currently, for cell gripping, a cell gripping system in the related technology can only grip cells of a same size, but cannot grip cells of other sizes. In this way, the cell gripping has some limitations and has poor compatibility. Therefore, it can be seen that the cell gripping in the related technology has a technical problem of poor compatibility.

### SUMMARY

Embodiments of the present disclosure provide a cell gripping system, a control method therefor, and a production line module, which can improve compatibility between different sizes during cell gripping.

The technical solutions of the present disclosure are implemented as follows:
An embodiment of the present disclosure provides a control method for a cell gripping system, including: where the cell gripping system includes a robot, a stand camera, and a gripper camera, the robot includes a cell gripping apparatus, the gripper camera is located on the cell gripping apparatus, and the method includes:
sending, by a robot, a first photographing request to a stand camera;
obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot;
moving, by the robot, to the photographing position and sending a second photographing request to the gripper camera;
obtaining, by the gripper camera, second image data in response to the second photographing request, determining, based on the second image data, arrangement parameters for the target column of cells, and sending the arrangement parameters to the robot; and
moving, by the robot, to the gripping position, adjusting a gripping angle based on the arrangement parameters, and controlling a cell gripping apparatus to firmly clamp the target column of cells, to complete gripping.

In this way, the robot controls the two cameras to obtain the gripping position parameters and the arrangement parameters of the target column of cells, to grip cells of different sizes, thereby improving compatibility of cell gripping.

In an optional embodiment, the system further includes a controller, and the sending, by the robot, a first photographing request to the stand camera includes:
sending, by the controller, a gripping instruction to the robot in response to a received gripping operation; and
sending, by the robot, the first photographing request to the stand camera in response to the gripping instruction.

In this way, the robot can start cell gripping, to intelligently grip cells of different sizes.

In an optional embodiment, the obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot includes:
photographing, by the stand camera, in response to the first photographing request, to obtain the first image data containing the to-be-gripped cells;
determining, by the stand camera based on the first image data, whether the target column of cells satisfies a grippable condition; and
determining, by the stand camera based on the first image data, a gripping position for the target column of cells and a photographing position for the target column of cells when the target column of cells satisfies the grippable condition, and sending the gripping position and the photographing position to the robot.

In this way, when the target column of cells does not satisfy the grippable condition, the target column of cells is adjusted until the target column of cells satisfies the grippable condition, to determine a gripping position and a photographing position of the target column of cells, and send the gripping position and the photographing position to the robot, to grip cells of different sizes.

In an optional embodiment, the determining, by the stand camera based on the first image data, a gripping position for the target column of cells and a photographing position for the target column of cells includes:
determining, by the stand camera based on the first image data, a gripping position for the target column of cells and a photographing position for a single cell of the target column of cells.

In this way, the robot may move to the gripping position to perform gripping, the gripper camera moves with the movement of the robot, and photographs after moving to the photographing position, to determine the arrangement parameters of the single cell. The arrangement parameters of the single cell are the arrangement parameters of the target column of cells. In this way, cells of different sizes are gripped.

In an optional embodiment, after the moving, by the robot, to the gripping position, adjusting a gripping angle based on the arrangement parameters, and controlling a cell gripping apparatus to firmly clamp the target column of cells, to complete gripping, the method further includes:
sending, by the robot, a gripping complete instruction of the target column of cells to the stand camera;
determining, by the stand camera based on the first image data, a next target column of cells from the to-be-gripped cells in response to the gripping complete instruction, and determining a gripping position of the next target column of cells and a photographing position of the next target column of cells; and
sending, by the stand camera, the gripping position of the next target column of cells and the photographing position of the next target column of cells to the robot, to complete a process of gripping the next target column of cells, until all columns of the to-be-gripped cells are gripped completely.

In this way, a process of gripping a next target column of cells is completed until all columns of to-be-gripped cells are gripped completely, thereby gripping all the to-be-gripped cells.

In an optional embodiment, after the moving, by the robot, to the gripping position, adjusting a gripping angle based on the arrangement parameters, and controlling a cell gripping apparatus to firmly clamp the target column of cells, to complete gripping, the method further includes:
returning to perform the sending, by the robot, a first photographing request to the stand camera.

In this way, a next column of cells is gripped more quickly. In this way, a speed of gripping a to-be-gripped cell is increased.

In an optional embodiment, the determining, based on the first image data, whether the target column of cells satisfies a grippable condition includes:
performing point cloud preprocessing on the first image data, to obtain first point cloud preprocessed data; and
determining whether the target column of cells satisfies the grippable condition according to the first point cloud preprocessed data.

In this way, whether the target column of cells satisfies a grippable condition can be accurately known through point cloud preprocessing, so that gripping can be successfully performed, reducing damage to the cells during gripping.

In an optional embodiment, the determining whether the target column of cells satisfies the grippable condition according to the first point cloud preprocessed data includes:
determining whether the to-be-gripped cells are empty according to the first point cloud preprocessed data;
determining that the to-be-gripped cells do not satisfy the grippable condition when determining that the to-be-gripped cells are empty; and
determining whether the target column of cells satisfies the grippable condition based on the first point cloud preprocessed data when determining that the to-be-gripped cells are not empty.

In this way, whether the target column of cells satisfies a grippable condition may be determined through point cloud preprocessing, thereby gripping cells of different sizes.

In an optional embodiment, the determining whether the target column of cells satisfies the grippable condition based on the first point cloud preprocessed data includes:
extracting the first point cloud preprocessed data, to obtain point cloud data containing the target column of cells;
determining a spacing between adjacent cells and a height of each cell in the point cloud data containing the target column of cells;
determining that the target column of cells satisfies the grippable condition when the spacings between the adjacent cells all fall within a preset spacing range and the heights of the cells all fall within a preset height range; and
determining that the target column of cells does not satisfy the grippable condition when at least one of the spacings between the adjacent cells does not fall within the preset spacing range and/or it is determined that at least one of the heights of the cells does not fall within the preset height range.

In this way, whether the target column of cells satisfies the grippable condition may be determined based on the first point cloud preprocessed data, thereby helping to efficiently grip the target column of cells.

In an optional embodiment, the determining, based on the first image data, a gripping position for a target column of cells among the to-be-gripped cells and a photographing position for the target column of cells includes:
calculating a center point of the target column of cells based on point cloud data containing the target column of cells and being in the data obtained by performing point cloud preprocessing on the first image data, and determining the center point of the target column of cells as the gripping position; and
calculating a center point of a single cell of the target column of cells based on the point cloud data containing the target column of cells, and determining the center point of the single cell as the photographing position.

In this way, a gripping position of the target column of cells and a photographing position of the target column of cells can be determined, to grip the target column of cells and photograph a single cell, to determine arrangement parameters of the target column of cells, thereby gripping cells of different sizes.

In an optional embodiment, the method further includes:
determining an orientation of the target column of cells based on the point cloud data containing the target column of cells, where
the orientation of the target column of cells includes: a horizontal direction and a vertical direction; the horizontal direction means that the target column of cells is parallel to a preset coordinate axis; and the vertical direction means that the target column of cells is perpendicular to the preset coordinate axis; and
sending the orientation of the target column of cells to the robot when sending the gripping position to the robot.

In this way, if the orientation of the target column of cells is determined and is sent to the robot together with the gripping position, the robot adjusts, based on the orientation of the target column of cells when moving to the photographing position, the cell gripping apparatus to be capable of firmly clamping short sides on two sides of the target column of cells after moving vertically downward.

In an optional embodiment, the moving, by the robot, to the photographing position and sending a second photographing request to the gripper camera includes:
moving, by the robot, to the photographing position, controlling a direction of the cell gripping apparatus based on the orientation of the target column of cells, and sending the second photographing request to the gripper camera.

In this way, the cell gripping apparatus is adjusted based on the determined orientation of the target column of cells, so that the cell gripping apparatus can grip cells of different sizes during gripping.

In an optional embodiment, when the photographing position is a photographing position of a single cell of the target column of cells, the determining, based on the second image data, arrangement parameters for the target column of cells, and sending the arrangement parameters to the robot includes:
extracting a side length, an orientation, and a polarity of a cell based on the second image data; and
sending the side length, the orientation, and the polarity of the single cell to the robot, where
the arrangement parameters include: the side length, the orientation, and the polarity of the single cell.

In this way, the robot can adjust the gripping angle based on the arrangement parameters, and control the cell gripping apparatus to firmly clamp the target column of cells to grip cells of different sizes.

In an optional embodiment, the extracting a side length, an orientation, and a polarity of the single cell based on the second image data includes:
performing point cloud preprocessing on the second image data, to obtain second point cloud preprocessed data;
determining the side length of the single cell based on the second point cloud preprocessed data;
extracting a two-dimensional code point cloud from the second point cloud preprocessed data;
determining one end of the single cell close to a position of the two-dimensional code point cloud as a negative electrode of the single cell;
determining the orientation of the single cell based on the second point cloud preprocessed data; and
determining the orientation of the target column of cells as the orientation of the single cell when the orientation of the single cell is the same as the orientation of the target column of cells.

In this way, a side length, an orientation, and a polarity of a single cell can be accurately determined, to form arrangement parameters used by the robot to adjust a gripping angle. A target column of cells is firmly clamped by using the cell gripping apparatus, to grip cells of different sizes.

In an optional embodiment, the moving, by the robot, to the gripping position, adjusting a gripping angle based on the arrangement parameters, and controlling a cell gripping apparatus to firmly clamp the target column of cells, to complete gripping includes:
moving, by the robot, to the gripping position;
determining, by the robot, the gripping angle based on the orientation and the polarity of the single cell, and performing adjustment to the gripping angle; and
controlling, by the robot based on the side length of the single cell, the cell gripping apparatus to firmly clamp the target column of cells, to complete gripping.

In this way, by using the gripping position and the arrangement parameters, the robot can grip cells of different sizes, thereby improving compatibility of the cell gripping system.

An embodiment of the present disclosure provides a cell gripping system, including a robot, a stand camera, and a gripper camera, where the robot includes a cell gripping apparatus, and the gripper camera is located on the cell gripping apparatus, where
the robot is configured to send a first photographing request to the stand camera;
the stand camera is configured to obtain, in response to the first photographing request, first image data containing to-be-gripped cells, determine, based on the first image data, a gripping position for a target column of cells among the to-be-gripped cells and a photographing position for the target column of cells, and send the gripping position and the photographing position to the robot;
the robot is configured to move to the photographing position and send a second photographing request to the gripper camera;
the gripper camera is configured to obtain second image data in response to the second photographing request, determine, based on the second image data, arrangement parameters for the target column of cells, and send the arrangement parameters to the robot; and
the robot is configured to move to the gripping position, adjust a gripping angle based on the arrangement parameters, and control a cell gripping apparatus to firmly clamp the target column of cells, to complete gripping.

In this way, the robot controls the two cameras to obtain the gripping position parameters and the arrangement parameters of the target column of cells, to grip cells of different sizes, thereby improving compatibility of cell gripping.

In an optional embodiment, the system further includes a controller, where
the controller is configured to send a gripping instruction to the robot in response to a received gripping operation; and
the robot is configured to send the first photographing request to the stand camera in response to the gripping instruction.

In this way, the robot can start cell gripping, to intelligently grip cells of different sizes.

In an optional embodiment, the stand camera is specifically configured to:
photograph in response to the first photographing request, to obtain the first image data containing the to-be-gripped cells;
determine, based on the first image data, whether the target column of cells satisfies a grippable condition; and
determine, based on the first image data, a gripping position for the target column of cells and a photographing position for the target column of cells when the target column of cells satisfies the grippable condition, and send the gripping position and the photographing position to the robot.

In this way, when the target column of cells does not satisfy the grippable condition, the target column of cells is adjusted until the target column of cells satisfies the grippable condition, to determine a gripping position and a photographing position of the target column, and send the gripping position and the photographing position to the robot, to grip cells of different sizes.

In an optional embodiment, including:
the robot is configured to send, after moving to the gripping position, adjusting the gripping angle based on the arrangement parameters, and controlling the cell gripping apparatus to firmly clamp the target column of cells, to complete gripping, a gripping complete instruction of the target column of cells to the stand camera; and
the stand camera is configured to:
   determine, based on the first image data, a next target column of cells from the to-be-gripped cells in response to the gripping complete instruction, and determine a gripping position of the next target column of cells and a photographing position of the next target column of cells; and
   send the gripping position of the next target column of cells and the photographing position of the next target column of cells to the robot, to complete a process of gripping the next target column of cells, until all columns of the to-be-gripped cells are gripped completely.

In this way, a process of gripping a next target column of cells is completed until all columns of to-be-gripped cells are gripped completely, thereby gripping all the to-be-gripped cells.

In an optional embodiment, including:
the robot is configured to send, after moving to the gripping position, adjusting the gripping angle based on the arrangement parameters, and controlling the cell gripping apparatus to firmly clamp the target column of cells, to complete gripping, a first photographing request to the stand camera.

In this way, a next column of cells is gripped more quickly. In this way, a speed of gripping a to-be-gripped cell is increased.

In an optional embodiment, the stand camera is further configured to:
perform point cloud preprocessing on the first image data, to obtain first point cloud preprocessed data; and
determine whether the target column of cells satisfies the grippable condition according to the first point cloud preprocessed data.

In this way, whether the target column of cells satisfies a grippable condition can be accurately known through point cloud preprocessing, so that gripping can be successfully performed, reducing damage to the cells during gripping.

In an optional embodiment, when the photographing position is a photographing position of a single cell of the target column of cells, the gripper camera is further configured to:
extract a side length, an orientation, and a polarity of the single cell based on the second image data; and
send the side length, the orientation, and the polarity of the single cell to the robot, where
the arrangement parameters include: the side length, the orientation, and the polarity of the single cell.

In this way, the robot can adjust the gripping angle based on the arrangement parameters, and control the cell gripping apparatus to firmly clamp the target column of cells to grip cells of different sizes.

In an optional embodiment, the robot is further configured to:
move to the gripping position;
determine the gripping angle based on the orientation and the polarity of the single cell, and perform adjustment to the gripping angle; and
control, based on the side length of the single cell, the cell gripping apparatus to firmly clamp the target column of cells, to complete gripping.

In this way, by using the gripping position and the arrangement parameters, the robot can grip cells of different sizes, thereby improving compatibility of the cell gripping system.

An embodiment of the present disclosure provides a production line module for cell gripping, including an operation region, a cell gripping apparatus, and a tray gripping apparatus, where the operation region is used for carrying a cell of a to-be-gripped tray, the cell gripping apparatus is configured to grip the cell at the operation region, and after the cell gripping apparatus grips the cell, the tray gripping apparatus is at least configured to grip the tray.

According to the production line module for cell gripping provided in this embodiment of the present disclosure, the cell gripping apparatus is disposed, and the cell gripping apparatus may grip a cell at an operation region, thereby saving time required for manually gripping a cell. On such a basis, the tray gripping apparatus is further disposed, and the tray gripping apparatus may grip a tray carrying no cell after the cell gripping apparatus grips a cell, to reduce a phenomenon that the operation region is overstocked with the tray carrying no cell and a cell of a to-be-gripped tray cannot enter the operation region, which would cause a problem of reducing a speed of gripping a cell, thereby increasing a speed at which the production line module for cell gripping grips a cell, and improving automation of the production line module for cell gripping.

In an optional embodiment, the operation region includes a first operation region and a second operation region, the first operation region is used for carrying the cell of the to-be-gripped tray, the cell gripping apparatus grips the cell in the first operation region, and the tray gripping apparatus grips the tray located in the first operation region and transports the tray to the second operation region.

In an optional embodiment, the operation region includes a first transport region and a second transport region, the first transport region is used for transporting the cell of the to-be-gripped tray to the first operation region, and the second transport region transports the tray in the second operation region to another position.

In an optional embodiment, the production line module for cell gripping further includes: a stand fixed relative to the operation region, a stand camera disposed on the stand, and a first gripper camera disposed on the cell gripping apparatus, and/or a second gripper camera disposed on the tray gripping apparatus, where the stand camera is configured to collect image information of the operation region, the first gripper camera is configured to collect image information of the cell gripping apparatus, and the second gripper camera is configured to collect image information of the tray gripping apparatus.

In an optional embodiment, the cell gripping apparatus includes a first rack, a first clamping claw assembly, a second clamping claw assembly, a clamping drive part, and a first distance adjustment mechanism, where the first clamping claw assembly is disposed on the first rack and has a first clamping member; the second clamping claw assembly is disposed on the first rack and has a second clamping member, where the first clamping member and the second clamping member are disposed opposite to each other and at an interval; the clamping drive part is configured to drive the first clamping member and/or the second clamping member to move, to cause the first clamping member and the second clamping member to move toward each other, where the first clamping member and the second clamping member collaborate with each other to clamp the cell; and the first distance adjustment mechanism is disposed between the first rack and the first clamping claw assembly, and/or between the first rack and the second clamping claw assembly, and configured to drive the first clamping claw assembly and the second clamping claw assembly to move toward or away from each other relative to the rack, to adjust a distance between the first clamping claw assembly and the second clamping claw assembly.

In an optional embodiment, the first distance adjustment mechanism includes a linear drive part, and the linear drive part is directly in transmission connection to the first clamping claw assembly and/or the second clamping claw assembly, to drive the first clamping claw assembly and the second clamping claw assembly to move toward or away from each other relative to the first rack.

In an optional embodiment, the first distance adjustment mechanism includes a rotation drive part and a transmission mechanism, the transmission mechanism has an input end in transmission connection to the rotation drive part and an output end in transmission connection to the first clamping claw assembly and/or the second clamping claw assembly, and the transmission mechanism is configured to convert a rotation torque of the rotation drive part into a linear motion, and transmit the linear motion to the first clamping claw assembly and/or the second clamping claw assembly.

In an optional embodiment, the transmission mechanism includes a transmission rod having a thread and a thread disposed on the first clamping claw assembly and/or the second clamping claw assembly, the transmission rod is fixedly connected to the rotation drive part, the thread of the transmission rod matches the thread on the first clamping claw assembly and/or the second clamping claw assembly, and the rotation drive part drives the transmission rod to rotate, to drive the first clamping claw assembly and the second clamping claw assembly to move toward or away from each other relative to the first rack.

In an optional embodiment, two ends of the transmission rod respectively extend to the first clamping claw assembly and the second clamping claw assembly, the thread on the transmission rod includes a first thread and a second thread that are respectively located in opposite directions on two sides, the thread of the first clamping claw assembly adapts to the first thread, and the thread of the second clamping claw assembly adapts to the second thread; and when the transmission rod rotates, the first thread drives the first clamping claw assembly to move, and the second thread drives the second clamping claw assembly to move, to cause the first clamping claw assembly and the second clamping claw assembly to move toward or away from each other relative to the first rack.

In an optional embodiment, the first distance adjustment mechanism further includes a first guide rail assembly, and the first clamping claw assembly and/or the second clamping claw assembly is slidably connected to the first rack by using the first guide rail assembly.

In an optional embodiment, the first guide rail assembly includes a first guide rail fixed to the first rack, and a first slide block fixed to the first clamping claw assembly and/or the second clamping claw assembly, the first guide rail extends along a linear direction in which the first clamping claw assembly and the second clamping claw assembly move toward or away from each other relative to the first rack, and the first slide block is slidably connected to the first guide rail.

In an optional embodiment, the first distance adjustment mechanism further includes a distance measurement member, and the distance measurement member is configured to measure a displacement amount generated when the first clamping claw assembly and the second clamping claw assembly move toward or away from each other relative to the first rack.

In an optional embodiment, the first clamping member and/or the second clamping member includes a fixation bracket, an abutment block, and a deformation member, and the deformation member is located between the abutment block and the fixation bracket, to provide a buffer force pushing the abutment block and the fixation bracket apart.

In an optional embodiment, the first clamping member and/or the second clamping member includes a plurality of abutment blocks and a plurality of deformation members that are disposed corresponding to each other, and the plurality of abutment blocks is disposed abreast.

In an optional embodiment, gaps between adjacent abutment blocks are less than a width of a single cell and greater than or equal to an interference fit gap.

In an optional embodiment, widths of the plurality of abutment blocks are less than or equal to the width of the single cell.

In an optional embodiment, the tray gripping apparatus includes a second rack, a third clamping claw assembly, a fourth clamping claw assembly, a first drive mechanism, a second drive mechanism, and a second distance adjustment mechanism, where the third clamping claw assembly is disposed on the second rack and has a third clamping member; the fourth clamping claw assembly is disposed on the second rack and has a fourth clamping member, where the third clamping member and the fourth clamping member are disposed opposite to each other and at an interval; the first drive mechanism is disposed between the second rack and the third clamping claw assembly and between the second rack and the fourth clamping claw assembly, and configured to drive the third clamping member and the fourth clamping member to simultaneously move between the first operation region and the second operation region; the second drive mechanism is disposed between the first drive mechanism and the third clamping claw assembly and between the first drive mechanism and the fourth clamping claw assembly, and configured to drive the third clamping member and the fourth clamping member to simultaneously move toward or away from the tray; and the second distance adjustment mechanism is disposed between the second drive mechanism and the third clamping claw assembly and/or at the second drive mechanism and the fourth clamping claw assembly, and configured to drive the third clamping member and the fourth clamping member to move toward or away from each other relative to the second drive mechanism, to adjust a distance between the third clamping member and the fourth clamping member, to cause the third clamping member and the fourth clamping member to collaborate with each other to grip the tray.

In an optional embodiment, the first drive mechanism includes a first drive member and a second guide rail assembly, the third clamping claw assembly and the fourth clamping claw assembly are both connected to the second guide rail assembly, the first drive member is connected to the second guide rail assembly, the first drive member drives the second guide rail assembly, and the second guide rail assembly simultaneously drives the third clamping member and the fourth clamping member to move between the first operation region and the second operation region.

In an optional embodiment, the second guide rail assembly includes a second guide rail disposed on the second rack and a second slide block disposed on the third clamping claw assembly and the fourth clamping claw assembly, the second guide rail extends along a direction in which the first operation region and the second operation region are disposed, the first drive member drives the second slide block, and the second slide block slides in the second guide rail.

In an optional embodiment, the second drive mechanism includes a second drive member and a third guide rail assembly, both the third clamping claw assembly and the fourth clamping claw assembly are connected to the third guide rail assembly, the second drive member is connected to the third guide rail assembly, the second drive member drives the third guide rail assembly, and the third guide rail assembly drives the third clamping member and the fourth clamping member to simultaneously move toward or away from the tray.

In an optional embodiment, the third guide rail assembly includes a third guide rail disposed on the first drive mechanism and a third slide block disposed on the third clamping claw assembly and the fourth clamping claw assembly, the second guide rail extends in a direction moving toward or away from the tray, the second drive member drives the third slide block, and the third slide block slides in the third guide rail.

In an optional embodiment, the second distance adjustment mechanism includes a third drive member and a fourth guide rail assembly, the third clamping claw assembly and the fourth clamping claw assembly are connected to the fourth guide rail assembly, the third drive member is connected to the fourth guide rail assembly, the third drive member drives the fourth guide rail assembly, and the fourth guide rail assembly drives the third clamping member and the fourth clamping member to move toward or away from each other relative to the second drive mechanism.

In an optional embodiment, the fourth guide rail assembly includes a fourth guide rail disposed on the second drive mechanism and a fourth slide block disposed on the third clamping claw assembly and the fourth clamping claw assembly, the fourth guide rail extends along a direction in which the third clamping member and the fourth clamping member are disposed opposite to each other, the third drive member drives the fourth slide block, and the fourth slide block slides in the fourth guide rail.

In an optional embodiment, two second distance adjustment mechanisms are provided, where one second distance adjustment mechanism is disposed between the second drive mechanism and the third clamping claw assembly, and the other second distance adjustment mechanism is disposed between the second drive mechanism and the fourth clamping claw assembly, to drive the third clamping member and the fourth clamping member respectively, to drive the third clamping member and the fourth clamping member to move toward or away from each other relative to the second drive mechanism.

In an optional embodiment, a plurality of third clamping claw assemblies and a plurality of fourth clamping claw assemblies are provided, the plurality of third clamping claw assemblies and the plurality of third clamping claw assemblies are disposed in a one-to-one correspondence, and each of the third clamping claw assemblies and the fourth clamping claw assemblies is correspondingly provided with the second distance adjustment mechanism.

The embodiments of the present disclosure provide a cell gripping system, a control method therefor, and a production line module. The cell gripping system includes a robot, a stand camera, and a gripper camera, where the robot includes a cell gripping apparatus, the gripper camera is located on the cell gripping apparatus, and the method may include: sending, by a robot, a first photographing request to a stand camera; obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot; moving, by the robot, to the photographing position and sending a second photographing request to the gripper camera; obtaining, by the gripper camera, second image data in response to the second photographing request, determining, based on the second image data, arrangement parameters for the target column of cells, and sending the arrangement parameters to the robot; and moving, by the robot, to the gripping position, adjusting a gripping angle based on the arrangement parameters, and controlling a cell gripping apparatus to firmly clamp the target column of cells, to complete gripping. That is to say, in the embodiments of the present disclosure, the robot can obtain the first image data by sending the first photographing request to the stand camera, obtain the gripping position and the photographing position based on the first image data, send the second photographing request to the gripper camera based on the photographing position to obtain the second image data, and obtain the arrangement parameters based on the second image data. Therefore, after obtaining the gripping position and the arrangement parameters, the robot may move to the gripping position, thereby improving gripping accuracy, adjust the gripping angle by using the arrangement parameters, and control the cell gripping apparatus to firmly clamp the target column of cells. The robot performs adjustment based on the gripping angle, so that the robot can grip cells of different sizes, thereby improving compatibility of cell gripping.

### BRIEF DESCRIPTION OF THE DRAWINGS

Various other advantages and benefits will become apparent to a person of ordinary skill in the art upon reading the following detailed description of preferred implementations. The accompanying drawings are only for the purpose of illustrating the preferred implementations and are not construed as a limitation to the present disclosure. In all the accompanying drawings, the same reference numerals indicate the same components. In the accompanying drawings:
FIG. 1 is a schematic diagram of a structure of a cell gripping system according to an embodiment of the present disclosure;
FIG. 2 is a schematic flowchart of a control method for a cell gripping system according to an embodiment of the present disclosure;
FIG. 3 is a schematic flowchart of an example of a control method for a cell gripping system according to an embodiment of the present disclosure;
FIG. 4 is a schematic diagram of a structure of a cell of a to-be-gripped tray according to an embodiment of the present disclosure;
FIG. 5 is a schematic diagram of a structure of an operation region and a stand camera according to an embodiment of the present disclosure;
FIG. 6 is a schematic diagram of a top view structure of an operation region and a stand camera according to an embodiment of the present disclosure;
FIG. 7 is a schematic diagram of a structure of a cell gripping apparatus and a first gripper camera according to an embodiment of the present disclosure;
FIG. 8 is a schematic diagram of a bottom structure of a cell gripping apparatus and a first gripper camera according to an embodiment of the present disclosure;
FIG. 9 is a schematic diagram of a top view structure of a cell gripping apparatus and a first gripper camera according to an embodiment of the present disclosure;
FIG. 10 is a schematic diagram of a side view structure of a cell gripping apparatus and a first gripper camera according to an embodiment of the present disclosure;
FIG. 11 is a schematic diagram of a bottom view structure of a cell gripping apparatus and a first gripper camera according to an embodiment of the present disclosure;
FIG. 12 is an enlarged schematic structural diagram of a part A in FIG. 7;
FIG. 13 is an enlarged schematic structural diagram of a part B in FIG. 8;
FIG. 14 is a schematic diagram of a structure of a tray gripping apparatus according to an embodiment of the present disclosure;
FIG. 15 is a main view of a tray gripping apparatus according to an embodiment of the present disclosure;
FIG. 16 is a top view of a tray gripping apparatus according to an embodiment of the present disclosure;
FIG. 17 is an enlarged schematic structural diagram of a part C in FIG. 14; and
FIG. 18 is an enlarged schematic structural diagram of a part D in FIG. 14.

### Descriptions of reference numerals:

4-operation region; 41-first operation region; 42-second operation region; 43-first transport region; 44-second transport region; 45-material inlet; 46-material outlet; 47-safety gate assembly; 48-height detection grating; 5-cell gripping apparatus; 51-first rack; 52-first clamping claw assembly; 521-first clamping member; 53-second clamping claw assembly; 531-second clamping member; 5211-fixation bracket; 5212-abutment block; 5213-deformation member; 54-clamping drive part; 55-first distance adjustment mechanism; 551-rotation drive part; 552-transmission mechanism; 56-first guide rail assembly; 57-distance measurement member; 6-stand; 7-stand camera; 8-first gripper camera; 9-tray gripping apparatus; 91-second rack; 93-third clamping claw assembly; 931-third clamping member; 94-fourth clamping claw assembly; 941-fourth clamping member; 95-first drive mechanism; 951-first drive member; 952-second guide rail assembly; 96-second drive mechanism; 961-second drive member; 962-third guide rail assembly; 97-second distance adjustment mechanism; 971-third drive member; 972-fourth guide rail assembly; 10-tray; and 11-cell.

### DETAILED DESCRIPTION

The embodiments of the technical solutions of the present disclosure will be described in detail below with reference to the accompanying drawings. The following embodiments are only used for illustrating the technical solutions of the present disclosure more explicitly, and are thus only interpreted as examples, rather than used to limit the protection scope of the present disclosure.

Unless otherwise defined, meanings of all technical and scientific terms used in this specification are the same as those usually understood by a person skilled in the art to which the present disclosure belongs. The terms used in the specification are merely intended to describe objectives of specific examples, but are not intended to limit the present disclosure. The terms "including" and "having" and any variants thereof in the specification of the present disclosure and in the description of the accompanying drawings are intended to cover non-exclusive inclusion.

In the description according to the embodiments of the present disclosure, the technical terms "first", "second", "third", and the like are only used for distinguishing different objects, and should not be understood as indicating or implying relative importance or implying the number, specific order or primary and secondary relationship of indicated technical features. In the description according to the embodiments of the present disclosure, "a plurality of" means two or more, unless otherwise expressly and specifically defined.

Reference herein to "an embodiment" means that a particular feature, structure, or characteristic described in connection to the embodiment may be included in at least one embodiment of the present disclosure. The term appearing at different positions of the specification may not necessarily refer to the same embodiment or an independent or alternative embodiment that is mutually exclusive with another embodiment. A person skilled in the art explicitly or implicitly understands that the embodiments described in the specification may be combined with other embodiments.

In the descriptions of embodiments of the present disclosure, the term "and/or" in the present disclosure describes only an association relationship for describing associated objects and represents that three relationships may be present. For example, A and/or B may represent the presence of the three cases: A alone, both A and B, and B alone. In addition, the character "/" in this specification usually indicates an "or" relationship between the associated objects.

In the description according to the embodiments of the present disclosure, the directions or positional relationships indicated by the technical terms such as "length", "width", "thickness", "upper", "lower", "front", "rear", "left", "right", "vertical", "horizontal", "top", "bottom", "inside", "outside", and "circumferential", are only for the convenience of describing the embodiments of the present disclosure and simplifying the description, rather than indicating or implying that the involved apparatus or element should have a specific orientation or should be configured, operated, or used in the specific orientation, therefore, they cannot be understood as limiting the embodiments of the present disclosure.

In the descriptions of the embodiments of the present disclosure, unless otherwise expressly specified and defined, the technical terms "mounted", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. A person of ordinary skill in the art may understand the specific meanings of the foregoing terms in the embodiments of the present disclosure according to specific situations.

In the descriptions of the embodiments of the present disclosure, unless explicitly specified and limited otherwise, the technical term "contact" should be understood in a broad sense, and may be direct contact, or may be contact through an intermediate layer, may be contact with no substantial interaction force between the two that are in contact, or may be contact with an interaction force between the two that are in contact.

Currently, new energy batteries are more widely applied in life and industry. The new energy batteries have been not only applied to energy storage power systems of hydropower, thermal power, wind power and solar power stations, but also widely applied to electric traffic tools such as electric bicycles, electric motorcycles, and electric vehicles, as well as to various fields such as aerospace. With continuously increasing application of the power batteries, the market demand is also constantly expanding.

In the embodiments of the present disclosure, a battery may be a battery cell (sometimes also referred to as a cell), or a battery may be a battery module or a battery pack including a plurality of battery cells. A battery cell refers to a basic unit that can implement mutual conversion between chemical energy and electric energy, and may be used for making a battery module or a battery pack, to supply power to an electric apparatus. The battery cell may be a secondary battery, and the secondary battery refers to a battery cell that can be used continually by activating an active material in a charging method after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in this embodiment of the present disclosure.

In the related technology, a cell gripping system can only grip cells of a same size, but cannot grip cells of different sizes. It can be learned that the cell gripping in the related technology has a technical problem of poor compatibility.

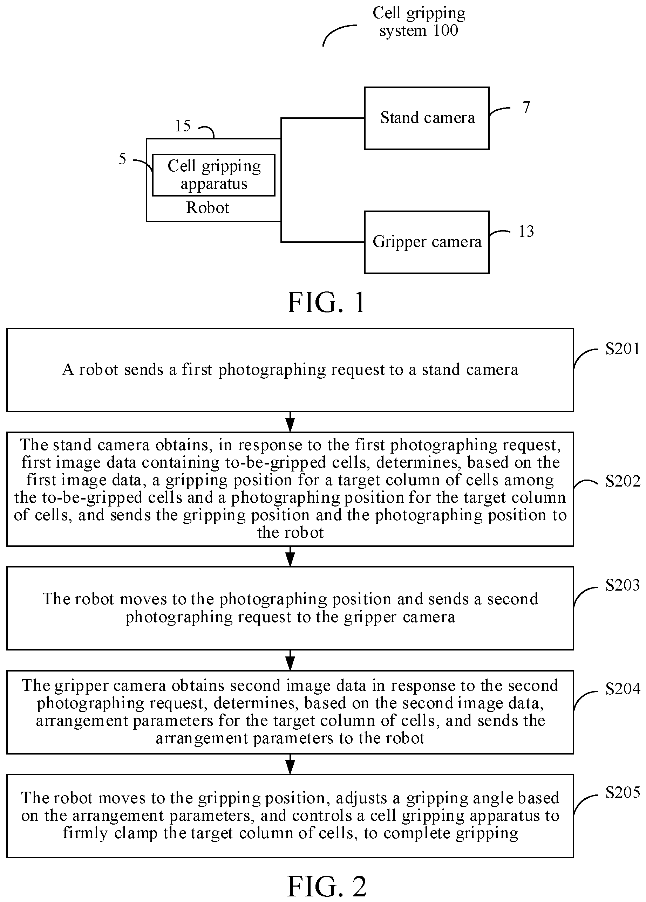

To improve compatibility of cell gripping, an embodiment of this disclosure provides a control method for a cell gripping system. The method is applied to the cell gripping system. An embodiment of this disclosure provides a cell gripping system. FIG. 1 is a schematic diagram of a structure of a cell gripping system according to an embodiment of the present disclosure. As shown in FIG. 1, the cell gripping system 100 may include: a robot 15, a stand camera 7, and a gripper camera 13. The robot 15 includes a cell gripping apparatus 5, and the gripper camera 13 is located on the cell gripping apparatus 5. The cell gripping apparatus 5 may also be referred to as a gripper.

The robot 15 is communicatively connected to each of the stand camera 7 and the gripper camera 13, and is configured to perform data communication with each of the stand camera 7 and the gripper camera 13, so that the stand camera 7 and the gripper camera 13 photograph, process image data obtained through the photographing, to obtain related parameters of cell gripping, and send the related parameters to the robot 15, thereby enabling the cell gripping system 100 to accurately grip cells of different sizes.

Based on the foregoing cell gripping system 100, an embodiment of this disclosure provides a control method for a cell gripping system. FIG. 2 is a schematic flowchart of a control method for a cell gripping system according to an embodiment of the present disclosure. As shown in FIG. 2, the control method for a cell gripping system may include:
S201. A robot sends a first photographing request to a stand camera.

In S201, the cell gripping system sends a first photographing request to the stand camera by using the robot. It should be noted that before the control method for a cell gripping system, camera calibration needs to be performed on an original stand camera and an original gripper camera, to obtain a calibrated stand camera and a calibrated gripper camera, so that the stand camera and the gripper camera can obtain more accurate gripping positions, photographing positions, and arrangement parameters in the control method for a cell gripping system, which helps the cell gripping system to grip cells of different sizes.

After camera calibration is completed, the robot may send a first photographing request to the stand camera after the robot receives a starting operation that instructs to grip a cell and that is sent by a user, so that the stand camera performs a photographing operation in response to the first photographing request. Alternatively, the robot may send a first photographing request to the stand camera when the robot receives a gripping instruction that instructs to grip a cell and that is sent by another electronic device, for example, a controller of the cell gripping system, so that the stand camera performs a photographing operation in response to the first photographing request. Herein, this is not specifically limited in this embodiment of the present disclosure.

The stand camera and the gripper camera may both be three-dimensional (3D) cameras. In addition, the stand camera not only can photograph in response to the first photographing request, but also can perform image processing on image data obtained through the photographing, to obtain parameters helping to grip cells of different sizes. Similarly, the gripper camera not only can photograph in response to the second photographing request, but also can perform image processing on image data obtained through the photographing, to obtain parameters helping to grip cells of different sizes.

S202. The stand camera obtains, in response to the first photographing request, first image data containing to-be-gripped cells, determines, based on the first image data, a gripping position for a target column of cells among the to-be-gripped cells and a photographing position for the target column of cells, and sends the gripping position and the photographing position to the robot.

Through S201, the stand camera receives the first photographing request, photographs the to-be-gripped cells in response to the first photographing request, to obtain and first image data, then performs image processing, for example, point cloud preprocessing on the first image data, to obtain a gripping position of the target column of cells in the to-be-gripped cells and a photographing position of the target column of cells, and sends the obtained gripping position and photographing position to the robot.

It should be noted that, generally, the to-be-gripped cells are arranged on foam in columns, where the to-be-gripped cells may include one column of cells, or may include a plurality of columns of cells. Herein, this is not specifically limited in this embodiment of the present disclosure. In addition, a plurality of cells is arranged abreast on each column of cells, each cell is placed in a groove on the foam, and grooves on the foam are disposed at intervals, where the cell gripping in this embodiment of the present disclosure is gripping the cells one by one in columns.

S203. The robot moves to the photographing position and sends a second photographing request to the gripper camera.

Through S202, the robot obtains the gripping position and the photographing position of the target column of cells. To enable the cell gripping apparatus of the robot to accurately grip the entire column of cells, in S203, after obtaining the photographing position, the robot moves based on the photographing position, so that the robot moves to the photographing position, and sends the second photographing request to the gripper camera on the robot.

The movement of the robot enables the cell gripping apparatus to move accordingly. Therefore, when the robot moves to the photographing position, the cell gripping apparatus also moves to the photographing position. Therefore, after receiving the second photographing request, the gripper camera responds to the second photographing request after moving to the photographing position.

S204. The gripper camera obtains second image data in response to the second photographing request, determines, based on the second image data, arrangement parameters for the target column of cells, and sends the arrangement parameters to the robot.

Through S203, the robot obtains the second photographing request, photographs in response to the second photographing request, to obtain second image data, and then determines arrangement parameters of the target column of cells based on the second image data, where the arrangement parameters may include: a side length, an orientation, and a polarity. All cells in the target column of cells are cells whose sizes are the same, whose orientations are the same, and whose polarities are the same. In this case, the side length is the side length of a single cell, the orientation is the orientation of the single cell, and the polarity is the polarity of the single cell.

After determining the arrangement parameters of the target column of cells, the gripper camera sends the arrangement parameters to the robot, so that the robot can combine the arrangement parameters and the gripping position to complete gripping of the target column of cells.

S205. The robot moves to the gripping position, adjusts a gripping angle based on the arrangement parameters, and controls a cell gripping apparatus to firmly clamp the target column of cells, to complete gripping.

In S204, the robot receives the arrangement parameters, and first moves to the gripping position with reference to the gripping position received in S202. If the gripping position carries the orientation of the target column of cells, the cell gripping apparatus may be controlled to rotate based on the orientation of the target column of cells, so that when an arrangement direction of the cell gripping apparatus moves toward the target column of cells vertically downward, the cell gripping apparatus is placed on a single side of the target column of cells. In addition, the robot adjusts a gripping angle based on the arrangement parameters, and controls a cell gripping apparatus to firmly clamp the target column of cells, thereby completing gripping of the target column of cells.

It can be seen that through the foregoing S201 to S205, the robot first sends the first photographing request to the stand camera, the stand camera sends the determined gripping position and photographing position to the robot in response to the first photographing request, the robot moves to the photographing position, and then sends the second photographing request to the gripper camera, the gripper camera sends the determined arrangement parameters to the robot in response to the second photographing request, and finally the robot moves to the gripping position, so that the robot adjusts a gripping angle based on the arrangement parameters, and controls a cell gripping apparatus to firmly clamp the target column of cells, to complete gripping. In this way, the robot controls the two cameras to obtain the gripping position parameters and the arrangement parameters of the target column of cells, to grip cells of different sizes, thereby improving compatibility of cell gripping.

To send, by using the robot, the first photographing request to the stand camera, in an optional embodiment, the system may further include a controller, and S201 may include:
sending, by the controller, a gripping instruction to the robot in response to a received gripping operation; and
sending, by the robot, the first photographing request to the stand camera in response to the gripping instruction.

It may be understood that, when the robot receives a starting operation from a user or a gripping instruction from another electronic device to instruct to grip a cell, the robot sends the first photographing request to the stand camera.

For the gripping instruction sent by the another electronic device, the user may send a gripping operation to the controller in the cell gripping system, so that the controller sends the gripping instruction to the robot in response to the gripping operation, and the robot receives the gripping instruction and sends the first photographing request to the stand camera in response to the gripping instruction. The gripping operation herein may be a click operation on a gripping button on a user interface of the controller, or may be a click operation on a physical button on the controller. Herein, this is not specifically limited in this embodiment of the present disclosure.

In this way, the robot can start cell gripping, to intelligently grip cells of different sizes.

Further, to determine the gripping position and the photographing position, in an optional embodiment, S202 may include:
photographing, by the stand camera, in response to the first photographing request, to obtain the first image data containing the to-be-gripped cells;
determining, by the stand camera based on the first image data, whether the target column of cells satisfies a grippable condition; and
determining, by the stand camera based on the first image data, a gripping position for the target column of cells and a photographing position for the target column of cells when the target column of cells satisfies the grippable condition, and sending the gripping position and the photographing position to the robot.

It may be understood that, the stand camera photographs after receiving the first photographing request, to obtain the first image data containing the to-be-gripped cells, and then determines, based on the first image data, whether the target column of cells satisfies the grippable condition. Herein, spacings between adjacent cells in the target column of cells may be determined based on the first image data, to determine whether the grippable condition is satisfied. Alternatively, a height of each cell in the target column of cells may be determined based on the first image data, to determine whether the grippable condition is satisfied. Certainly, whether the grippable condition is satisfied may alternatively be determined by using both spacings between adjacent cells and a height of each cell. Herein, this is not specifically limited in this embodiment of the present disclosure.

For the determining whether the grippable condition is satisfied based on the spacings between the adjacent cells, the spacings between the adjacent cells may be determined by using data obtained by performing point cloud preprocessing on the first image data, to determine whether the target column of cells satisfies the grippable condition according to whether the spacings between the adjacent cells all fall within a preset spacing range. If the spacings between the adjacent cells all fall within the preset spacing range, it is determined that the target column of cells satisfies the grippable condition. If none of the spacings between the adjacent cells falls within the preset spacing range, it is determined that the target column of cells does not satisfy the grippable condition.

Herein, only when the target column of cells satisfies the grippable condition, the stand camera determines, based on the first image data, a gripping position and a photographing position for the target column. When the target column of cells does not satisfy the grippable condition, the target column of cells is adjusted until the target column of cells satisfies the grippable condition, to determine a gripping position and a photographing position of the target column, and send the gripping position and the photographing position to the robot, to grip cells of different sizes.

To determine a gripping position for a target column of cells and a photographing position for the target column of cells, in an optional embodiment, the determining, by the stand camera based on the first image data, a gripping position for the target column of cells and a photographing position for the target column of cells may include:
determining, by the stand camera based on the first image data, a gripping position for the target column of cells and a photographing position for a single cell of the target column of cells.

It may be understood that, the stand camera determines, based on the obtained first image data, a gripping position for the target column of cells and a photographing position for a single cell of the target column of cells. It can be seen that, the photographing position of the target column of cells determined in this embodiment of the present disclosure is a photographing position of a single cell in the target column of cells. The single cell is generally a cell located at any one of two ends of the target column of cells.

That is to say, the gripping position determined by using the first image data is a gripping position of the target column of cells, and the determined photographing position is a photographing position of a single cell of the target column. In this way, the robot may move to the gripping position to perform gripping, the gripper camera moves with the movement of the robot, and photographs after moving to the photographing position, to determine the arrangement parameters of the single cell. The arrangement parameters of the single cell are the arrangement parameters of the target column of cells. In this way, cells of different sizes are gripped.

To continuously grip a plurality of columns of cells, in an optional embodiment, after S205, the above-mentioned method may further include:
sending, by the robot, a gripping complete instruction of the target column of cells to the stand camera;
determining, by the stand camera based on the first image data, a next target column of cells from the to-be-gripped cells in response to the gripping complete instruction, and determining a gripping position of the next target column of cells and a photographing position of the next target column of cells; and
send the gripping position of the next target column of cells and the photographing position of the next target column of cells to the robot, to complete a process of gripping the next target column of cells, until all columns of the to-be-gripped cells are gripped completely.

It may be understood that, after S205 is performed completely, if a plurality of columns of cells exist in the to-be-gripped cells, to continue to perform gripping of a next column of cells, after gripping the target column of cells, the robot sends a gripping complete instruction of the target column of cells to the stand camera. In response to the gripping complete instruction, the stand camera determines a next target column of cells from the to-be-gripped cells based on the first image data, determines a gripping position of the next target column of cells and a photographing position of the next target column of cells, and then sends the gripping position of the next target column of cells and the photographing position of the next target column of cells to the robot.

The robot receives the gripping position of the next target column of cells and the photographing position of the next target column of cells. The robot moves to the photographing position of the next target column of cells, and sends a second photographing request to the gripper camera, which is similar to the process of gripping the target column of cells. Details are not described herein again.

In this way, a process of gripping a next target column of cells is completed until all columns of to-be-gripped cells are gripped completely, thereby gripping all the to-be-gripped cells.

In addition, because the to-be-gripped cells are gripped one by one in columns in a gripping process, each time of gripping a column of cells may affect arrangement of other columns of cells. Consequently, the other columns of cells do not satisfy the grippable condition, and can continue to be gripped only after being further sorted. In this way, a speed of gripping the to-be-gripped cells is affected. To grip the to-be-gripped cells more quickly, in an optional embodiment, after S205, the above-mentioned method may further include:
returning to perform the sending, by the robot, a first photographing request to the stand camera.

It may be understood that, after S205, go back to perform S201. In this way, after a column of cells is gripped each time, the to-be-gripped cells are photographed again, and a gripping position, a photographing position, and arrangement parameters of a target column of cells are determined again, to grip a next column of cells more quickly. In this way, a speed of gripping the to-be-gripped cells is increased.

To determine whether the target column of cells satisfies the grippable condition, in an optional embodiment, the determining, based on the first image data, whether the target column of cells satisfies a grippable condition may include:
performing point cloud preprocessing on the first image data, to obtain first point cloud preprocessed data; and
determining whether the target column of cells satisfies the grippable condition according to the first point cloud preprocessed data.

It may be understood that, the stand camera first performs point cloud preprocessing on the first image data, to obtain first point cloud preprocessed data, and then determines, according to the first point cloud preprocessed data, whether the target column of cells satisfies the grippable condition. That is, the target column of cells may be known by using the first point cloud preprocessed data obtained through the point cloud preprocessing, and whether the target column of cells satisfies the grippable condition is determined based on the point cloud preprocessed data corresponding to the target column of cells. Spacings between adjacent cells in the target column of cells and a height of each cell may be determined from the point cloud preprocessed data corresponding to the target column of cells. In addition, when the spacings satisfy a preset spacing range, and the height of each cell satisfies a preset height range, it is determined that the target column of cells satisfies the grippable condition. Therefore, when the grippable is satisfied, the stand camera determines, based on the first image data, a gripping position for the target column of cells and a photographing position for the target column of cells, and sends the gripping position and the photographing position to the robot.

In this way, whether the target column of cells satisfies a grippable condition can be accurately known through point cloud preprocessing, so that gripping can be successfully performed, reducing damage to the cells during gripping.

Further, to determine whether the target column of cells satisfies the grippable condition, in an optional embodiment, the determining whether the target column of cells satisfies the grippable condition according to the first point cloud preprocessed data may include:
determining whether the to-be-gripped cells are empty according to the first point cloud preprocessed data;
determining that the to-be-gripped cells do not satisfy the grippable condition when determining that the to-be-gripped cells are empty; and
determining whether the target column of cells satisfies the grippable condition based on the first point cloud preprocessed data when determining that the to-be-gripped cells are not empty.

It may be understood that, after point cloud preprocessing is performed on the first image data to obtain first point cloud preprocessed data, whether the to-be-gripped cells are empty is first determined based on the first point cloud preprocessed data. Herein, point cloud preprocessing is mainly performed on a depth image of the first image data, to obtain data of a top-level point cloud, that is, the first point cloud preprocessed data. Distribution of the top-level point cloud is determined according to the first point cloud preprocessed data. If the top-level point cloud is distributed at an edge of the first image data, it indicates that no cell is placed in a groove of the foam, and therefore, it is determined that the to-be-gripped cells are empty. If the top-level point cloud is distributed in a groove region of the foam, it indicates that a cell is placed in the groove of the foam, and therefore, it is determined that the to-be-gripped cells are not empty.

When it is determined that the to-be-gripped cells are not empty, it indicates that there is a cell that is not gripped in the to-be-gripped cells. In this case, whether the target column of cells satisfies the grippable condition is determined based on the first point cloud preprocessed data.

The target column of cells is first determined based on the first point cloud preprocessed data, and then whether the target column of cells satisfies the grippable condition is determined based on the point cloud preprocessed data corresponding to the target column of cells.

Spacings between adjacent cells in the target column of cells and a height of each cell may be determined from the point cloud preprocessed data corresponding to the target column of cells. In addition, when all the spacings satisfy the preset spacing range, and/or the height of each cell satisfies the preset height range, it is determined that the target column of cells satisfies the grippable condition.

In this way, whether the target column of cells satisfies a grippable condition may be determined through point cloud preprocessing, thereby gripping cells of different sizes.

Further, to determine whether the target column of cells satisfies the grippable condition, in an optional embodiment, the determining whether the target column of cells satisfies the grippable condition based on the first point cloud preprocessed data may include:
extracting the first point cloud preprocessed data, to obtain point cloud data containing the target column of cells;
determining a spacing between adjacent cells and a height of each cell in the point cloud data containing the target column of cells;
determining that the target column of cells satisfies the grippable condition when the spacings between the adjacent cells all fall within a preset spacing range and the heights of the cells all fall within a preset height range; and
determining that the target column of cells does not satisfy the grippable condition when at least one of the spacings between the adjacent cells does not fall within the preset spacing range and/or it is determined that at least one of the heights of the cells does not fall within the preset height range.

It may be understood that, point cloud preprocessed data corresponding to the target column of cells, that is, the foregoing point cloud data containing the target column of cells is extracted from the first point cloud preprocessed data, and then spacings between adjacent cells and a height of each cell are determined from the point cloud data containing the target column of cells. Because the first point cloud preprocessed data is the top-level point cloud data, each cell region may be determined based on the point cloud data containing the target column of cells, then spacings between adjacent cells are determined based on a boundary of each cell region, and a height of each cell is calculated based on the point cloud data containing the target column of cells, that is, the top-level point cloud.

After the spacings between the adjacent cells and the height of each cell are determined, the spacings between the adjacent cells are compared with the preset spacing range, and the height of each cell is compared with the preset height range. After comparison, if all the spacings between the adjacent cells fall within the preset spacing range and the height of each cell falls within the preset height range, it indicates that each cell in the target column of cells is uniformly placed in the groove of the foam, and no unqualified cell such as a crooked cell or an inclined cell is disposed. Therefore, it is determined that the target column of cells satisfies the grippable condition.

By comparison, if one or more of the spacings between adjacent cells do not fall within the preset spacing range and/or one or more of the heights of all the cells do not fall within the preset height range, it indicates that an unqualified cell such as a crooked cell or an inclined cell is disposed. Therefore, it is determined that the target column of cells does not satisfy the grippable condition.

In this way, whether the target column of cells satisfies the grippable condition may be determined based on the first point cloud preprocessed data, thereby helping to efficiently grip the target column of cells.

To determine a gripping position for a target column of cells and a photographing position for the target column of cells, in an optional embodiment, the determining, based on the first image data, a gripping position for a target column of cells among the to-be-gripped cells and a photographing position for the target column of cells may include:
calculating a center point of the target column of cells based on point cloud data containing the target column of cells and being in the data obtained by performing point cloud preprocessing on the first image data, and determining the center point of the target column of cells as the gripping position; and
calculating a center point of a single cell of the target column of cells based on the point cloud data containing the target column of cells, and determining the center point of the single cell as the photographing position.

It may be understood that, after point cloud preprocessing is performed on the first image data, that is, point cloud preprocessing is performed on a depth image of the first image data, to obtain top-level point cloud data, that is, the first point cloud preprocessed data, point cloud data corresponding to the target column, that is, the foregoing point cloud data containing the target column of cells is extracted from the first point cloud preprocessed data.

Based on the point cloud data containing the target column of cells, a region of the target column of cells may be considered as a rectangular region. A center point of the rectangular region is calculated. The center point of the rectangular region is a center line point of the target column of cells, and the center point of the target column of cells is used as a gripping position of the target column of cells.

To determine a photographing position, and to photograph a single cell based on the point cloud data containing the target column of cells, a center point of the single cell in the target column of cells is calculated. Point cloud data of the single cell also forms a rectangular region, and a center point of the rectangular region is similarly calculated, to obtain a center point of the target column of cells, that is, a gripping position of the target column of cells.

In this way, a gripping position of the target column of cells and a photographing position of the target column of cells can be determined, to grip the target column of cells and photograph a single cell, to determine arrangement parameters of the target column of cells, thereby gripping cells of different sizes.

To enable the cell gripping apparatus to grip an entire column of cells, in an optional embodiment, the above-mentioned method may further include:
determining an orientation of the target column of cells based on the point cloud data containing the target column of cells; and
sending the orientation of the target column of cells to the robot when sending the gripping position to the robot.

It may be understood that, to enable the cell gripping apparatus to grip an entire column of cells, the cell gripping apparatus needs to be adjusted to be capable of firmly clamping short sides on two sides of the target column of cells after moving vertically downward. Therefore, an orientation of the target column of cells needs to be determined first, to control a direction of the cell gripping apparatus based on the orientation.

A long side of the target column of cells may be determined based on the point cloud data containing the target column of cells, and the orientation of the target column of cells may be determined based on a relationship between the long side and a preset coordinate axis. The preset coordinate axis may be any side of the foam, where the orientation of the target column of cells includes: a horizontal direction and a vertical direction; the horizontal direction means that the target column of cells is parallel to a preset coordinate axis; and the vertical direction means that the target column of cells is perpendicular to the preset coordinate axis.

In this way, if the orientation of the target column of cells is determined and is sent to the robot together with the gripping position, the robot adjusts, based on the orientation of the target column of cells when moving to the photographing position, the cell gripping apparatus to be capable of firmly clamping short sides on two sides of the target column of cells after moving vertically downward.

In this way, the orientation of the target column of cells is used for adjusting the cell gripping apparatus, so that the cell gripping apparatus can grip cells of different sizes during gripping.

To adjust the cell gripping apparatus to accurately grip an entire column of cells, in an optional embodiment, S203 may include:
moving, by the robot, to the photographing position, controlling a direction of the cell gripping apparatus based on the orientation of the target column of cells, and sending the second photographing request to the gripper camera.

After the orientation of the target column of cells is determined, the orientation is sent to the robot together with the gripping position. When receiving the photographing position and moving to the photographing position, the robot adjusts, based on the orientation of the target column of cells, the cell gripping apparatus to be capable of firmly clamping short sides on two sides of the target column of cells after moving vertically downward, and sends a second photographing request to the gripper camera, so that the gripper camera can photograph to obtain second image data containing a single cell.

In this way, the cell gripping apparatus is adjusted based on the determined orientation of the target column of cells, so that the cell gripping apparatus can grip cells of different sizes during gripping.

To determine the arrangement parameters of the target column of cells, in an optional embodiment, when the photographing position is a photographing position of a single cell of the target column, the determining, based on the second image data, arrangement parameters for the target column of cells, and sending the arrangement parameters to the robot includes:
extracting a side length, an orientation, and a polarity of the single cell based on the second image data; and
sending the side length, the orientation, and the polarity of the single cell to the robot.

It may be understood that, the gripper camera photographs to obtain second image data. The second image data includes a single cell in the target column of cells. In this way, a side length, an orientation, and a polarity of the single cell can be extracted based on the second image data and sent to the robot, where the arrangement parameters include: the side length, the orientation, and the polarity of the single cell.

That is, a side length, an orientation, and a polarity of the single cell, that is, arrangement parameters of the target column of cells, are extracted from the image data of the single cell, and are sent to the robot, so that the robot can adjust the gripping angle based on the arrangement parameters, and control the cell gripping apparatus to firmly clamp the target column of cells to grip cells of different sizes.

Further, to extract a side length, an orientation, and a polarity of a single cell, in an optional embodiment, the extracting a side length, an orientation, and a polarity of the single cell based on the second image data may include:
performing point cloud preprocessing on the second image data, to obtain second point cloud preprocessed data;
determining the side length of the single cell based on the second point cloud preprocessed data;
extracting a two-dimensional code point cloud from the second point cloud preprocessed data;
determining one end of the single cell close to a position of the two-dimensional code point cloud as a negative electrode of the single cell;
determining the orientation of the single cell based on the second point cloud preprocessed data; and
determining the orientation of the target column of cells as the orientation of the single cell when the orientation of the single cell is the same as the orientation of the target column of cells.

It may be understood that, to determine a side length, an orientation, and a polarity of a single cell, point cloud preprocessing is first performed on the second image data. Herein, point cloud preprocessing is mainly performed on a depth image in the second image data. The point cloud preprocessing may include: performing first point cloud transformation (camera image (camera)-> machine data (robot)), obtaining a top-level point cloud, performing point cloud clustering, performing second point cloud transformation (robot-> camera), then performing fool-proofing, and filtering out a tray point cloud, to obtain second point cloud preprocessed data. It can be learned that, the second point cloud preprocessed data is top-level point cloud data of the single cell.

After the second point cloud preprocessed data is obtained, the side length of the single cell may be determined based on the second point cloud preprocessed data. Specifically, a quantity of pixels occupied by a side length of a long side of the single cell may be determined, and a length corresponding to each quantity of pixels is multiplied by the quantity of occupied pixels, to obtain the side length of the single cell.

For the polarity of the single cell, because a two-dimensional code is disposed at a negative electrode of the single cell, and a two-dimensional code point cloud may be extracted from the second point cloud preprocessed data, one end of the single cell close to the two-dimensional code point cloud may be determined as the negative electrode of the single cell, and then the other end of the single cell may be determined as a positive electrode.

The orientation of the single cell may be determined based on a relationship between a long side of the single cell in the second point cloud preprocessed data and a preset coordinate axis. When the long side of the single cell is parallel to the preset coordinate axis, the long side of the single cell is horizontal, and when the long side of the single cell is perpendicular to the preset coordinate axis, the long side of the single cell is vertical. After the orientation of the single cell is determined, comparison is performed to determine whether the orientation of the single cell is consistent with the previously determined orientation of the target column of cells. If the orientation of the single cell is consistent with the previously determined orientation of the target column of cells, it indicates that the orientation of the target column of cells is correct, and then the orientation of the target column of cells is determined as the orientation of the single cell. If the orientation of the single cell is inconsistent with the previously determined orientation of the target column of cells, it indicates that the orientation of the target column of cells is incorrect, and then the orientation of the target column of cells needs to be recalculated.

In this way, a side length, an orientation, and a polarity of a single cell can be accurately determined, to form arrangement parameters used by the robot to adjust a gripping angle. A target column of cells is firmly clamped by using the cell gripping apparatus, to grip cells of different sizes.

To grip the target column of cells, in an optional embodiment, S205 may include:
moving, by the robot, to the gripping position;
determining, by the robot, the gripping angle based on the orientation and the polarity of the single cell, and performing adjustment to the gripping angle; and
controlling, by the robot based on the side length of the single cell, the cell gripping apparatus to firmly clamp the target column of cells, to complete gripping.

It may be understood that, after the robot receives the arrangement parameters, the robot moves to the gripping position, the robot determines the gripping angle based on the orientation and the polarity of the single cell, and performs adjustment to the gripping angle, and the robot controls, based on the side length of the single cell, a distance by which the gripper is opened, to firmly clamp the target column of cells to complete gripping.

In this way, by using the gripping position and the arrangement parameters, the robot can grip cells of different sizes, thereby improving compatibility of the cell gripping system.

The control method for a cell gripping system in the foregoing one or more embodiments is described below by using an example.

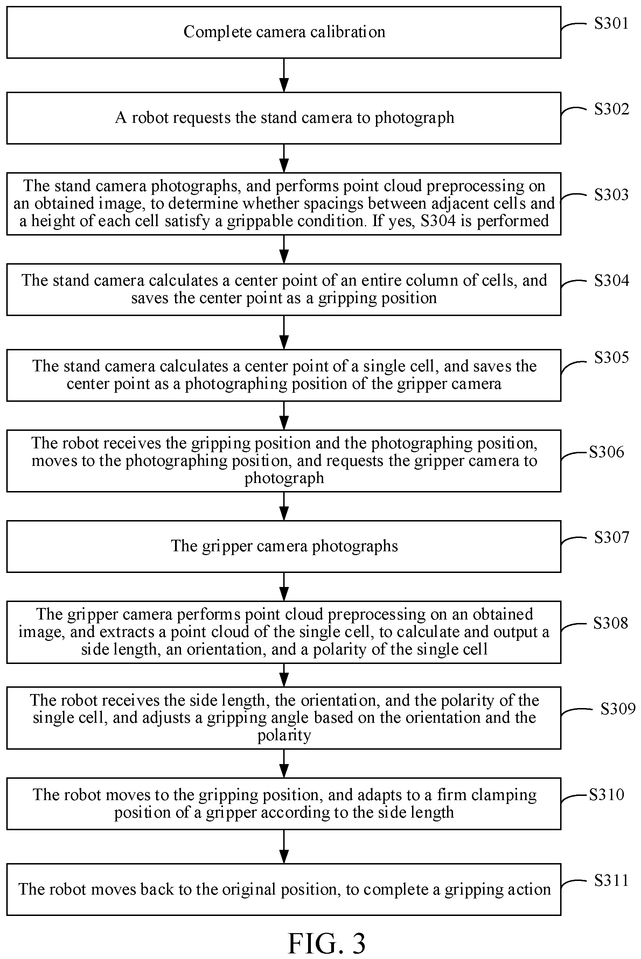

FIG. 3 is a schematic flowchart of an example of a control method for a cell gripping system according to an embodiment of the present disclosure. As shown in FIG. 3, the method may include:
S301. Complete camera calibration.
   The camera calibration herein includes calibration of a stand camera and calibration of a gripper camera.
S302. A robot requests the stand camera to photograph.
   The robot sends a photographing request to the stand camera, to request the stand camera to photograph.
S303. The stand camera photographs, and performs point cloud preprocessing on an obtained image, to determine whether spacings between adjacent cells and a height of each cell satisfy a grippable condition. If yes, S304 is performed.

Specifically, the stand camera performs point cloud preprocessing on an image obtained by photographing, determines spacings between adjacent cells in a target column of cells and a height of each cell according to point cloud preprocessed data, determines whether all the spacings between the adjacent cells fall within a preset spacing range, and determines whether the height of each cell falls within a preset height range. If all the spacings between the adjacent cells fall within the preset spacing range and the height of each cell falls within the preset height range, it is determined that the target column of cells satisfies the grippable condition. Otherwise, it is determined that the target column of cells does not satisfy the grippable condition.

When the stand camera processes the image obtained by photographing, point cloud preprocessing is first performed on the image obtained by photographing, and then incoming materials at odd-even layers are determined. A center point of the target column of cells is calculated by using point cloud preprocessed data, the center point is determined as a photographing position, and the orientation of the target column of cells is calculated, to determine a pose of a gripper, thereby facilitating gripping of the target column of cells.

S304. The stand camera calculates a center point of an entire column of cells, and saves the center point as a gripping position.

When the target column of cells satisfies the grippable condition, the stand camera calculates a center point of an entire column of cells, that is, coordinates of a center point of the target column of cells, by using point cloud preprocessed data, and determines the coordinates of the center point as a gripping position.

S305. The stand camera calculates a center point of a single cell, and saves the center point as a photographing position of the gripper camera.

Herein, coordinates of a center point of a single cell are calculated by using point cloud preprocessed data, and the coordinates of the center point of the single cell are determined as a photographing position.

S306. The robot receives the gripping position and the photographing position, moves to the photographing position, and requests the gripper camera to photograph.

The robot receives the gripping position and the photographing position, first moves to the photographing position, and sends a photographing request to the gripper camera, to request the gripper camera to photograph.

S307. The gripper camera photographs.

S308. The gripper camera performs point cloud preprocessing on an obtained image, and extracts a point cloud of the single cell, to calculate and output a side length, an orientation, and a polarity of the single cell.

Specifically, the gripper camera performs point cloud preprocessing on an image obtained by photographing to obtain a point cloud of the single cell, and calculates a side length, an orientation, and a polarity of the single cell based on the point cloud of the single cell.

For the processing, by the gripper camera, an image obtained by photographing, point cloud preprocessing is first performed on the image obtained by photographing, and a length of a long side of a single cell, that is, a side length of the single cell, is measured according to point cloud preprocessed data; and a two-dimensional code point cloud is extracted from the point cloud preprocessed data, and an orientation is determined according to a position of the two-dimensional code point cloud, where one end of the single cell close to the two-dimensional code point cloud is a negative electrode of the single cell, and the other end is a positive electrode of the single cell, so that the side length and the polarity of the single cell can be determined.

Finally, the orientation of the target column of cells may be determined as an orientation of the single cell.

S309. The robot receives the side length, the orientation, and the polarity of the single cell, and adjusts a gripping angle based on the orientation and the polarity.

S310. The robot moves to the gripping position, and adapts to a firm clamping position of a gripper according to the side length.

S311. The robot moves back to the original position, to complete a gripping action.

For visual point cloud preprocessing, a depth image of an image obtained by photographing is first converted into a point cloud, and then a point cloud normal is calculated and filtered (an image collected by a camera is changed into a point cloud image, and subsequently, the image is operated based on the point cloud); a point cloud (limited to extracting a point cloud of a target column of cells) in a 3D Region Of Interest (ROI) is extracted, thereby narrowing a spatial range and reducing a calculation amount; and then, the following processing is performed: performing point cloud transformation (camera-> robot), obtaining a top-level point cloud, performing point cloud clustering, performing point cloud transformation (robot-> camera), performing fool-proofing, and filtering out a tray point cloud.

For the visual point cloud, a pose of each cell (equivalent to a center point of each cell) is compared with a parallel direction of a camera coordinate system (equivalent to a preset coordinate axis), and a direction of an entire column of cells (equivalent to an orientation of a target column of cells) is determined according to an angle difference, to determine whether the direction is a horizontal direction or a vertical direction.

An embodiment of the present disclosure provides a control method for a cell gripping system. The method may include: sending, by a robot, a first photographing request to a stand camera; obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot; moving, by the robot, to the photographing position and sending a second photographing request to the gripper camera; obtaining, by the gripper camera, second image data in response to the second photographing request, determining, based on the second image data, arrangement parameters for the target column of cells, and sending the arrangement parameters to the robot; and moving, by the robot, to the gripping position, adjusting a gripping angle based on the arrangement parameters, and controlling a cell gripping apparatus to firmly clamp the target column of cells, to complete gripping. That is to say, in the embodiments of the present disclosure, the robot can obtain the first image data by sending the first photographing request to the stand camera, obtain the gripping position and the photographing position based on the first image data, send the second photographing request to the gripper camera based on the photographing position to obtain the second image data, and obtain the arrangement parameters based on the second image data. Therefore, after obtaining the gripping position and the arrangement parameters, the robot may move to the gripping position, thereby improving gripping accuracy, adjust the gripping angle by using the arrangement parameters, and control the cell gripping apparatus to firmly clamp the target column of cells. The robot performs adjustment based on the gripping angle, so that the robot can grip cells of different sizes, thereby improving compatibility of cell gripping.

Based on a same inventive concept, an embodiment of the present disclosure provides a cell gripping system. As shown in FIG. 1, the system 100 may include: a robot 15, a stand camera 7, and a gripper camera 13, and the robot further includes: a cell gripping apparatus 5, and the gripper camera 13 is located on the cell gripping apparatus 5, where
the robot 15 is configured to send a first photographing request to the stand camera 7;
the stand camera 7 is configured to obtain, in response to the first photographing request, first image data containing to-be-gripped cells, determine, based on the first image data, a gripping position for a target column of cells among the to-be-gripped cells and a photographing position for the target column of cells, and send the gripping position and the photographing position to the robot 15;
the robot 15 is configured to move to the photographing position and send a second photographing request to the gripper camera 13;
the gripper camera 13 is configured to obtain second image data in response to the second photographing request, determine, based on the second image data, arrangement parameters for the target column of cells, and send the arrangement parameters to the robot 15; and
the robot 15 is configured to move to the gripping position, adjust a gripping angle based on the arrangement parameters, and control a cell gripping apparatus to firmly clamp the target column of cells, to complete gripping.

In an optional embodiment, the system 100 further includes a controller, which may include:
the controller is configured to send a gripping instruction to the robot 15 in response to a received gripping operation; and
the robot 15 is configured to send the first photographing request to the stand camera 7 in response to the gripping instruction.

In an optional embodiment, the stand camera 7 may be specifically configured to:
photograph in response to the first photographing request, to obtain the first image data containing the to-be-gripped cells;
determine, based on the first image data, whether the target column of cells satisfies a grippable condition; and
determine, based on the first image data, a gripping position for the target column of cells and a photographing position for the target column of cells when the target column of cells satisfies the grippable condition, and send the gripping position and the photographing position to the robot 15.

In an optional embodiment, the stand camera 7 may be further configured to:
determine, based on the first image data, a gripping position for the target column of cells and a photographing position for a single cell of the target column of cells.

In an optional embodiment, may include:
the robot 15 is configured to send, after moving to the gripping position, adjusting the gripping angle based on the arrangement parameters, and controlling the cell gripping apparatus to firmly clamp the target column of cells, to complete gripping, a gripping complete instruction of the target column of cells to the stand camera 7; and
the stand camera 7 is configured to:
   determine, based on the first image data, a next target column of cells from the to-be-gripped cells in response to the gripping complete instruction, and determine a gripping position of the next target column of cells and a photographing position of the next target column of cells; and
   send the gripping position of the next target column of cells and the photographing position of the next target column of cells to the robot 15, to complete a process of gripping the next target column of cells, until all columns of the to-be-gripped cells are gripped completely.

In an optional embodiment, may include:
the robot 15 is configured to send, after moving to the gripping position, adjusting the gripping angle based on the arrangement parameters, and controlling the cell gripping apparatus to firmly clamp the target column of cells, to complete gripping, a first photographing request to the stand camera 7.

In an optional embodiment, the stand camera 7 may be further configured to:
perform point cloud preprocessing on the first image data, to obtain first point cloud preprocessed data; and
determine whether the target column of cells satisfies the grippable condition according to the first point cloud preprocessed data.

In an optional embodiment, the stand camera 7 may be further configured to:
determine whether the to-be-gripped cells are empty according to the first point cloud preprocessed data;
determine that the to-be-gripped cells do not satisfy the grippable condition when determining that the to-be-gripped cells are empty; and
determine whether the target column of cells satisfies the grippable condition based on the first point cloud preprocessed data when determining that the to-be-gripped cells are not empty.

In an optional embodiment, the stand camera 7 may be further configured to:
extract the first point cloud preprocessed data, to obtain point cloud data containing the target column of cells;
determine a spacing between adjacent cells and a height of each cell in the point cloud data containing the target column of cells;
determine that the target column of cells satisfies the grippable condition when the spacings between the adjacent cells all fall within a preset spacing range and the heights of the cells all fall within a preset height range; and
determine that the target column of cells does not satisfy the grippable condition when at least one of the spacings between the adjacent cells does not fall within the preset spacing range and/or it is determined that at least one of the heights of the cells does not fall within the preset height range.

In an optional embodiment, the stand camera 7 may be further configured to:
calculate a center point of the target column of cells based on point cloud data containing the target column of cells and being in the data obtained by performing point cloud preprocessing on the first image data, and determining the center point of the target column of cells as the gripping position; and
calculate a center point of a single cell of the target column of cells based on the point cloud data containing the target column of cells, and determining the center point of the single cell as the photographing position.

In an optional embodiment, the stand camera 7 may be further configured to:
determine an orientation of the target column of cells based on the point cloud data containing the target column of cells, where
the orientation of the target column of cells includes: a horizontal direction and a vertical direction; the horizontal direction means that the target column of cells is parallel to a preset coordinate axis; and the vertical direction means that the target column of cells is perpendicular to the preset coordinate axis; and
send the orientation of the target column of cells to the robot when sending the gripping position to the robot.

In an optional embodiment, the robot 15 may be further configured to:
move to the photographing position, controlling a direction of the cell gripping apparatus based on the orientation of the target column of cells, and sending the second photographing request to the gripper camera 13.

In an optional embodiment, when the photographing position is a photographing position of a single cell of the target column of cells, the gripper camera 13 may be further configured to:
extract a side length, an orientation, and a polarity of the single cell based on the second image data; and
send the side length, the orientation, and the polarity of the single cell to the robot 15, where
the arrangement parameters include: the side length, the orientation, and the polarity of the single cell.

In an optional embodiment, the stand camera 7 may be further configured to:
perform point cloud preprocessing on the second image data, to obtain second point cloud preprocessed data;
determine the side length of the single cell based on the second point cloud preprocessed data;
extract a two-dimensional code point cloud from the second point cloud preprocessed data;
determine one end of the single cell close to a position of the two-dimensional code point cloud as a negative electrode of the single cell;
determine the orientation of the single cell based on the second point cloud preprocessed data; and
determine the orientation of the target column of cells as the orientation of the single cell when the orientation of the single cell is the same as the orientation of the target column of cells.

In an optional embodiment, the robot 15 may be further configured to:
move to the gripping position;
determine the gripping angle based on the orientation and the polarity of the single cell, and perform adjustment to the gripping angle; and
control, based on the side length of the single cell, the cell gripping apparatus to firmly clamp the target column of cells, to complete gripping.

In this embodiment of the present disclosure, the robot may be any one of a Programmable Logic Controller (PLC), a single-chip microcomputer, a middle computer, and an upper computer; and the robot may include a processor, and a memory storing a processor executable instruction. When the instruction is executed by the processor, the foregoing control method for a cell gripping system is implemented.

In this embodiment of the present disclosure, the stand camera may be any one of a PLC, a single-chip microcomputer, a middle computer, and an upper computer; and the stand camera may include a processor, and a memory storing a processor executable instruction. When the instruction is executed by the processor, the foregoing control method for a cell gripping system is implemented.

In this embodiment of the present disclosure, the gripper camera may be any one of a PLC, a single-chip microcomputer, a middle computer, and an upper computer; and the gripper camera may include a processor, and a memory storing a processor executable instruction. When the instruction is executed by the processor, the foregoing control method for a cell gripping system is implemented.

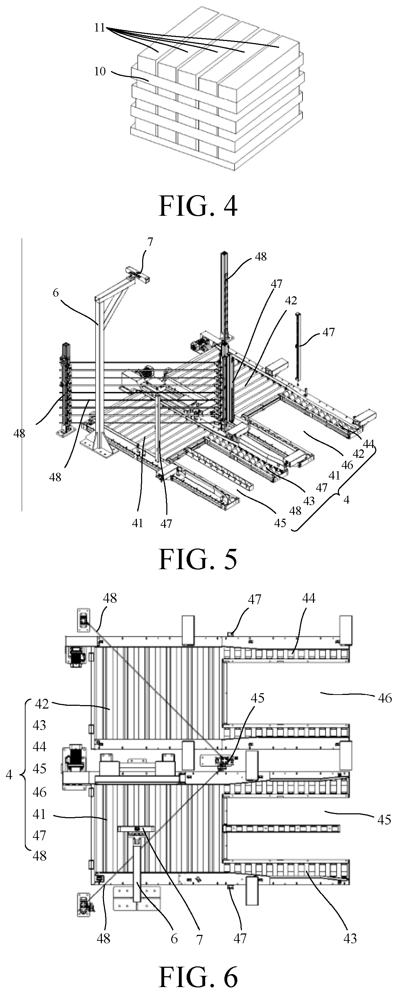

An embodiment of the present disclosure provides a production line module for cell gripping. Referring to FIG. 4 and FIG. 5, the production line module for cell gripping includes an operation region 4. Referring to FIG. 6, FIG. 7, and FIG. 14, the production line module for cell gripping further includes a cell gripping apparatus 5 and a tray gripping apparatus 9. The operation region 4 is used to carry a to-be-gripped cell 11. The cell gripping apparatus 5 is configured to grip the cell 11 at the operation region 4. After the tray gripping apparatus 9 grips the cell 11, and the tray gripping apparatus 9 is at least configured to grip the cell 11, the tray gripping apparatus 9 is at least configured to grip a tray 10.

In the embodiments of the present disclosure, the production line module for cell gripping is a production line module having the operation region 4, the cell gripping apparatus 5, and the tray gripping apparatus 9, and may be a whole production line including the operation region 4, the cell gripping apparatus 5, and the tray gripping apparatus 9, or may be a station of a production line including the operation region 4, the cell gripping apparatus 5, and the tray gripping apparatus 9. For example, the production line module for cell gripping is a station of loading a large package of the cell 11. The to-be-gripped cell 11 may be a single cell 11, or may be a group of cells 11, for example, a plurality of cells 11 arranged in groups in the tray 10. The cell 11 may be a prismatic battery cell. The operation region 4 may be any working platform on which the to-be-gripped cell 11 is conveniently placed, for example, a region having a transport mechanism, and the transport mechanism is linked to an entire production line.

In the production line module for cell gripping provided in this embodiment of the present disclosure, the cell gripping apparatus is disposed, and the cell gripping apparatus may grip a cell 11 at an operation region 4, thereby saving time required for manually gripping a cell 11. On such a basis, the tray gripping apparatus 9 is further disposed, and the tray gripping apparatus 9 may grip a tray 10 carrying no cell 11 after the cell gripping apparatus 5 grips a cell 11, to reduce a phenomenon that the operation region is overstocked with the tray 10 carrying no cell 11 and a cell 11 of a to-be-gripped tray 10 cannot enter the operation region 4, which would cause a problem of reducing a speed of gripping a cell 11, thereby increasing a speed at which the production line module for cell gripping grips a cell 11, and improving automation of the production line module for cell gripping.

In an optional embodiment, referring to FIG. 5 and FIG. 6, the production line module for cell gripping further includes a stand 6 fixed relative to the operation region 4 and a stand camera 7 disposed on the stand 6, and the stand camera 7 is configured to collect image information on the operation region 4.

In the embodiments of the present disclosure, the stand 6 may be any structure that can have a fixed position relative to the operation region 4, for example, a structure that is fixed to the operation region 4, or a structure fixed to the ground or a wall near the operation region 4. A specific structure of the stand 6 may be a rod-like shape, a frame-like shape, a platelike shape, or the like. The stand camera 7 is configured to collect image information on the operation region 4, and the stand camera 7 may be a device having a photographing or video recording function. The image information may protect a photo, a video, or the like. Through photographing by the stand camera 7, a photo or a video of the operation region 4 can be obtained, to obtain corresponding image information.

In the production line module for cell gripping provided in this embodiment of the present disclosure, because the production line module for cell gripping in this embodiment of the present disclosure includes the stand camera 7, image information of the cell 11 located on the operation region 4 can be obtained by using the stand camera 7, and then some parameters of the cell 11 can be obtained by using the image information, to facilitate subsequent collaboration with the cell gripping apparatus 5, so that the cell gripping apparatus 5 can match the size of the corresponding cell 11 and move to an exact position to grip the cell 11.

In an optional embodiment, referring to FIG. 5 and FIG. 6, the production line module for cell gripping further includes a first gripper camera 8 disposed on a first rack 51, and the first gripper camera 8 is configured to collect image information of a cell gripping apparatus 5.

In this embodiment, the first gripper camera 8 is configured to collect image information of the cell gripping apparatus 5, and the first gripper camera 8 may be a device having a photographing or video recording function. The image information may protect a photo, a video, or the like. Through shooting by the first gripper camera 8, a picture or a video of a gripping situation of the cell gripping apparatus 5 may be obtained, to obtain corresponding image information.

In the production line module for cell gripping provided in this embodiment of the present disclosure, image information obtained by using the stand camera 7 and the first gripper camera 8 can provide more accurate information feedback for an entire gripping operation of the cell gripping apparatus 5, thereby facilitating control and production.

In an optional embodiment, referring to FIG. 5 and FIG. 6, the production line module for cell gripping further includes a second gripper camera on a second rack 91. The second gripper camera is configured to collect image information of a tray gripping apparatus 9.

In this embodiment, the second gripper camera is configured to collect image information of the tray gripping apparatus 9, and the second gripper camera may also be a device having a photographing function or a video recording function. The image information may protect a photo, a video, or the like. Through shooting by the second gripper camera, a picture or a video of a gripping situation of the tray gripping apparatus 9 may be obtained, to obtain corresponding image information.

In the production line module for cell gripping provided in this embodiment of the present disclosure, image information obtained by using the stand camera 7 and the second gripper camera can provide more accurate information feedback for an entire gripping operation of the tray gripping apparatus 9, thereby facilitating control and production.

In an optional embodiment, referring to FIG. 5 and FIG. 6, the operation region 4 includes a first operation region 41 and a second operation region 42, the first operation region 41 is used for carrying the cell 11 of the to-be-gripped tray 10, the cell gripping apparatus 5 grips the cell 11 in the first operation region 41, and the tray gripping apparatus 9 grips the tray 10 located in the first operation region 41 and transports the tray to the second operation region 42.

In the embodiments of the present disclosure, a size relationship between the first operation region 41 and the second operation region 42 is not limited in this embodiment of the present disclosure. The first operation region 41 may be larger than the second operation region 42, the first operation region 41 may be smaller than the second operation region 42, or the first operation region 41 may be equal to the second operation region 42. Similarly, shapes of the first operation region 41 and the second operation region 42 are not limited in this embodiment of the present disclosure. The first operation region 41 and the second operation region 42 may be in regular shapes, may be in a regular shape and an irregular shape, or may be in irregular shapes. In addition, in this embodiment of the present disclosure, whether the first operation region 41 and the second operation region 42 are in communication is not limited. In other words, a relative position between the first operation region 41 and the second operation region 42 is not limited, provided that the first operation region 41 can carry the cell 11 of the to-be-gripped tray 10, and the second operation region 42 can carry the tray 10 gripped by the tray gripping apparatus 9.

In the production line module for cell gripping provided in this embodiment of the present disclosure, the operation region 4 is divided into the first operation region 41 and the second operation region 42. The first operation region 41 is used for carrying the cell 11 of the to-be-gripped tray 10, and the second operation region 42 is used for carrying the tray 10 gripped by the tray gripping apparatus 9. The division of the operation region is beneficial to clarity of the production line module for cell gripping, and facilitates control and operation.

In an optional embodiment, referring to FIG. 5 and FIG. 6, the operation region 4 includes a first transport region 43 and a second transport region 44, the first transport region 43 is used for transporting the cell 11 of the to-be-gripped tray 10 to the first operation region 41, and the second transport region 44 transports the tray 10 in the second operation region 42 to another position.

In the embodiments of the present disclosure, the first transport region 43 is used for transporting the cell 11 of the to-be-gripped tray 10 to the first operation region 41. The first transport region 43 may be provided with a belt pulley, and the belt pulley drives the cell 11 of the to-be-gripped tray 10 to reach the first operation region 41. The first transport region 43 may be provided with a plurality of rotatable rollers. The cell 11 of the to-be-gripped tray 10 is placed on the rotatable roller, and a motor drives the roller to rotate to drive the cell 11 of the to-be-gripped tray 10 to reach the first transport region 43. Certainly, the first transport region 43 may alternatively be provided with another type of transport apparatus, which is not limited in this embodiment of the present disclosure.

In the embodiments of the present disclosure, the second transport region 44 transports the tray 10 in the second operation region 42 to another position. The second transport region 44 may be provided with a belt pulley, and the belt pulley drives the tray 10 in the second operation region 42 to be transported to another position. The second transport region 44 may be provided with a plurality of rotatable rollers. The tray 10 in the second operation region 42 is disposed on the rotatable roller. A motor drives the roller to rotate to drive the tray 10 in the second transport region 44 to reach another position. Certainly, the second transport region 44 may alternatively be provided with another type of transport apparatus, which is not limited in this embodiment of the present disclosure.

In the production line module for cell gripping provided in this embodiment of the present disclosure, the first transport region 43 and the second transport region 44 are disposed, the first transport region 43 is used for transporting the cell 11 of the to-be-gripped tray 10 to the first operation region 41, and the second transport region 44 transports the tray 10 in the second operation region 42 to another position. In this way, time and manpower can be saved.

In an optional embodiment, referring to FIG. 5, FIG. 6, and FIG. 14, the operation region 4 has a material inlet 45 and a material outlet 46. A cell 11 of the to-be-gripped tray 10 may enter a gripping position from the material inlet 45. After gripping and loading are completed, remaining fixtures (for example, fixtures of the tray 10) may be transported out from the material outlet 46.

In the embodiments of the present disclosure, relative positions and shapes of the material inlet 45 and the material outlet 46 are not limited in this embodiment of the present disclosure. The material inlet 45 and the material outlet 46 may be disposed on two opposite sides of the operation region 4, or may be disposed on one side of the operation region 4. Shapes of the material inlet 45 and the material outlet 46 may be regular shapes, may be irregular shapes, or may be an irregular shape and a regular shape. For example, the material inlet 45 and the material outlet 46 are disposed on one side of the operation region 4. Specifically, the material inlet 45 is disposed on the first transport region 43, and the material outlet 46 is disposed on the second transport region 44.

A specific transport process of the production line module for cell gripping is as follows: The cell 11 of the to-be-gripped tray 10 enters the first transport region 43 from the material inlet 45, and the first transport region 43 transports the cell 11 of the to-be-gripped tray 10 to the first operation region 41 until the cell 11 of the to-be-gripped tray 10 reaches the first operation region 41. In this case, the cell gripping apparatus 5 grips the cell 11 of the to-be-gripped tray 10 in the first operation region 41. After the cell gripping apparatus 5 grips the cell 11 of the to-be-gripped tray 10 in the first operation region 41, the tray gripping apparatus 9 grips the tray 10 in the first operation region 41 and transports the tray to the second operation region 42. In this case, the second transport region 44 transports the tray 10 in the second operation region 42 to the material outlet 46, and the tray 10 is transported out from the material outlet 46, and is to be used later.

For ease of operation and safety, two groups of safety gate assemblies 47 are disposed between each of the material inlet 45 and the material outlet 46 and the operation position. Whether a gripping operation can be performed is mainly determined by detecting whether a foreign object (such as a human body) enters the operation position. When a foreign object is detected, gripping is not allowed, thereby ensuring safe production.

A height detection grating 48 is disposed in the operation position, so that a size of the to-be-gripped cell 11 entering the operation region 4 can be detected, and with reference to the image information of the stand camera 7, relatively accurate and comprehensive parameters of the cell 11 can be obtained, to facilitate a subsequent gripping operation.

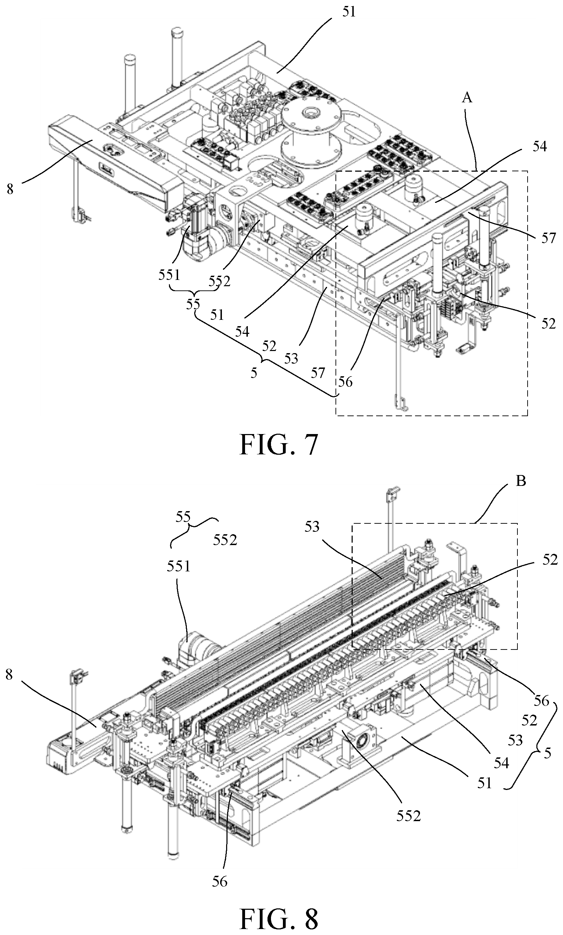

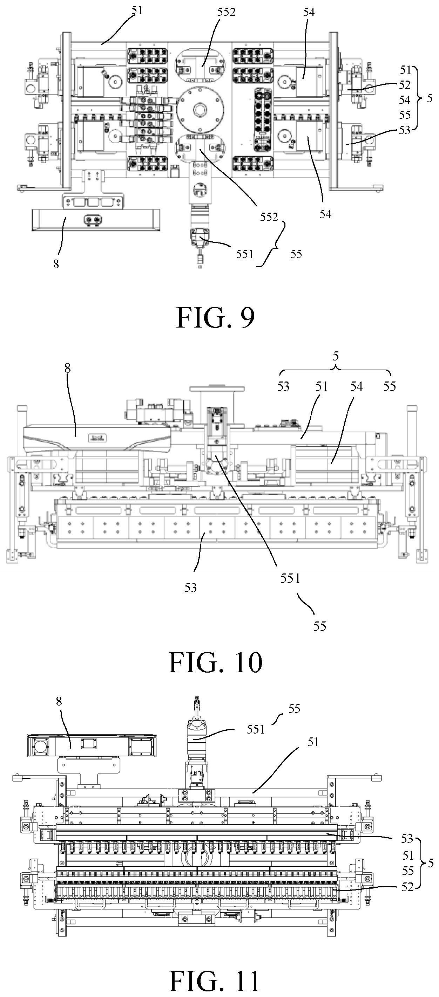

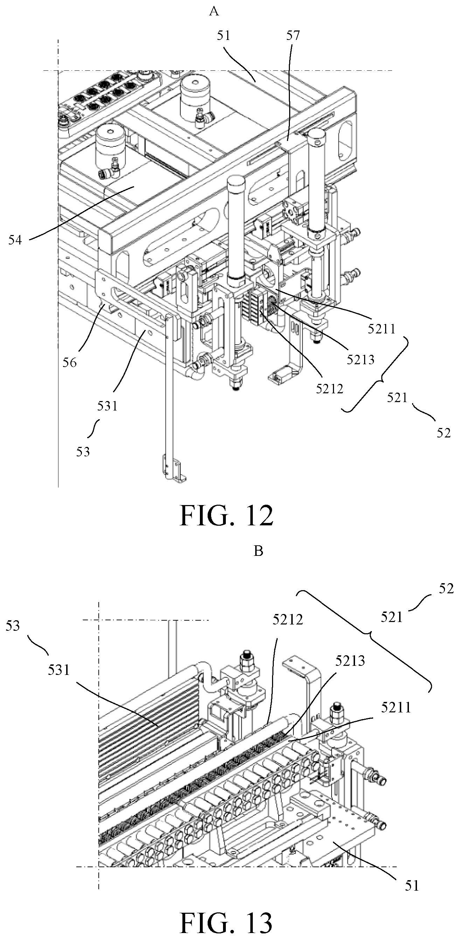

In an optional embodiment, referring to FIG. 7, FIG. 8, FIG. 9, FIG. 10, and FIG. 11, the cell gripping apparatus 5 includes a first rack 51, a first clamping claw assembly 52, a second clamping claw assembly 53, a clamping drive part 54, and a first distance adjustment mechanism 55. Then referring to FIG. 11 and FIG. 12, the first clamping claw assembly 52 is disposed on the first rack 51 and has a first clamping member 521; the second clamping claw assembly 53 is disposed on the first rack 51 and has a second clamping member 531, where the first clamping member 521 and the second clamping member 531 are disposed opposite to each other and at an interval; the clamping drive part 54 is configured to drive the first clamping member 521 and/or the second clamping member 531 to move, to cause the first clamping member 521 and the second clamping member 531 to move toward each other, where the first clamping member 521 and the second clamping member 531 collaborate with each other to clamp the cell 11; and the first distance adjustment mechanism 55 is disposed between the first rack 51 and the first clamping claw assembly 52, and/or between the first rack 51 and the second clamping claw assembly 53, and configured to drive the first clamping claw assembly 52 and the second clamping claw assembly 53 to move toward or away from each other relative to the first rack 51, to adjust a distance between the first clamping claw assembly 52 and the second clamping claw assembly 53.

In the production line gripping module for the cell gripping apparatus in this embodiment of the present disclosure, the first rack 51 is a support rack of the entire structure and may be set according to an actual situation. Components of the cell gripping apparatus 5 are fixed in reliance on the first rack 51. In some embodiments, the cell gripping apparatus 5 may be referred to as a gripper, which belongs to a part of a gripping robot, and is configured to grip a cell 11. The first clamping claw assembly 52 and the second clamping claw assembly 53 may be two sets of opposite systems, and are respectively used to correspond to two opposite sides of the cell 11. When the cell 11 is gripped, the first clamping member 521 of the first clamping claw assembly 52 and the second clamping member 531 of the second clamping claw assembly 53 are respectively abutted against two opposite sides of the cell 11, and the cell 11 may be clamped. There may be one or a plurality of clamping drive parts 54. For example, there is one clamping drive part 54, configured to drive the first clamping member 521 and the second clamping member 531 to move. Alternatively, there are two clamping drive parts 54. The two clamping drive parts 54 are respectively located on the first clamping claw assembly 52 and the second clamping claw assembly 53. The two clamping drive parts 54 separately drive, one to one, the first clamping member 521 and the second clamping member 531 to move. The first distance adjustment mechanism 55 is configured to adjust a spacing between the entire first clamping claw assembly 52 and the entire second clamping claw assembly 53, and the clamping drive part 54 only acts on the first clamping member 521 and/or the second clamping member 531. That is, the first distance adjustment mechanism 55 and the clamping drive part 54 are totally different concepts.

In the production line module for the cell gripping apparatus in this embodiment of the present disclosure, the first clamping claw assembly 52 and the second clamping claw assembly 53 are disposed on the first rack 51. Driven by the clamping drive part 54, the first clamping member 521 and the second clamping member 531 can move toward each other, to clamp the cell 11. However, limited by structural space of the first clamping claw assembly 52 and the second clamping claw assembly 53, an opening and closing distance between the first clamping member 521 and the second clamping member 531 is limited, and possibly, cells 11 of different sizes cannot be gripped. Therefore, to adapt to gripping of the cells 11 of different sizes, the present disclosure provides a first distance adjustment mechanism 55 disposed between the first rack 51 and the first clamping claw assembly 52 and/or disposed between the first rack 51 and the second clamping claw assembly 53. A distance between the entire first clamping claw assembly 52 and the entire second clamping claw assembly 53 may be directly adjusted by using the first distance adjustment mechanism 55, so that the opening and closing distance between the first clamping member 521 and the second clamping member 531 has a wider adjustment spacing, to further adapt to gripping of more cells 11 of different sizes.

In an optional embodiment, the first distance adjustment mechanism 55 includes a linear drive part, and the linear drive part is directly in transmission connection to the first clamping claw assembly 52 and/or the second clamping claw assembly 53, to drive the first clamping claw assembly 52 and the second clamping claw assembly 53 to move toward or away from each other relative to the first rack 51.

In this embodiment, the linear drive part is a mechanism that can implement a direct linear motion, and directly transmits a linear pushing force or pulling force to the first clamping claw assembly 52 and/or the second clamping claw assembly 53, to drive the first clamping claw assembly 52 and the second clamping claw assembly 53 to move toward or away from each other relative to the first rack 51. The transmission connection means a connection that can transmit a force, so that the linear drive part can drive the first clamping claw assembly 52 and/or the second clamping claw assembly 53 to move. That the linear drive part is directly in transmission connection to the first clamping claw assembly 52 and/or the second clamping claw assembly 53 includes three implementations: The linear drive part is directly in transmission connection to the first clamping claw assembly 52, the linear drive part is directly in transmission connection to the second clamping claw assembly 53, and the linear drive part is directly in transmission connection to the first clamping claw assembly 52 and the second clamping claw assembly 53. When the linear drive part is directly in transmission connection to the first clamping claw assembly 52, the first clamping claw assembly 52 may be driven by the linear drive part to move toward or away from the second clamping claw assembly 53, to drive the first clamping claw assembly 52 and the second clamping claw assembly 53 to move toward or away from each other relative to the first rack 51. When the linear drive part is directly in transmission connection to the second clamping claw assembly 53, the second clamping claw assembly 53 may be driven by the linear drive part to move toward or away from the first clamping claw assembly 52, to drive the first clamping claw assembly 52 and the second clamping claw assembly 53 to move toward or away from each other relative to the first rack 51. When the linear drive part is directly in transmission connection to the first clamping claw assembly 52 and the second clamping claw assembly 53, the first clamping claw assembly 52 may be driven by the linear drive part to move toward or away from the second clamping claw assembly 53, to drive the first clamping claw assembly 52 and the second clamping claw assembly 53 to move toward or away from each other relative to the first rack 51; the second clamping claw assembly 53 may be driven by the linear drive part to move toward or away from the first clamping claw assembly 52, to drive the first clamping claw assembly 52 and the second clamping claw assembly 53 to move toward or away from each other relative to the first rack 51; or the first clamping claw assembly 52 and the second clamping claw assembly 53 may be controlled simultaneously to move together, to move toward or away from each other. The linear drive part may be a mechanism such as a linear motor, an air cylinder, or an oil rod.

In an optional embodiment, referring to FIG. 7 and FIG. 9, the first distance adjustment mechanism 55 includes a rotation drive part 551 and a transmission mechanism 552, the transmission mechanism 552 has an input end in transmission connection to the rotation drive part 551 and an output end in transmission connection to the first clamping claw assembly 52 and/or the second clamping claw assembly 53, and the transmission mechanism 552 is configured to convert a rotation torque of the rotation drive part 551 into a linear motion, and transmit the linear motion to the first clamping claw assembly 52 and/or the second clamping claw assembly 53.

In this embodiment, the rotation drive part 551 is a mechanism that provides a torque through rotation, for example, an apparatus such as a motor. The transmission mechanism 552 is configured to convert a rotation torque of the rotation drive part 551 into a linear motion, so that the rotation torque of the rotation drive part 551 drives the first clamping claw assembly 52 and/or second clamping claw assembly 53 to perform a linear motion. Similarly, that the output end is in transmission connection to the first clamping claw assembly 52 and/or the second clamping claw assembly 53 includes three implementations: The output end is in transmission connection to the first clamping claw assembly 52, the output end is in transmission connection to the second clamping claw assembly 53, and the output end is in transmission connection to the first clamping claw assembly 52 and the second clamping claw assembly 53. The rotation drive part 551 may be a stepping motor to provide a torque, and may be further provided with a mechanism such as a speed reducer during output. The transmission mechanism 552 may be various mechanisms that can convert a rotation torque into linear motion, for example, a crank-link mechanism, a rack and pinion mechanism, a worm and gear mechanism, and a screw rod and nut mechanism.

In an optional embodiment, referring to FIG. 7 and FIG. 9, the transmission mechanism 552 includes a transmission rod having a thread and a thread (not shown in the figures) disposed on the first clamping claw assembly 52 and/or the second clamping claw assembly 53, the transmission rod is fixedly connected to the rotation drive part 551, the thread of the transmission rod matches the thread on the first clamping claw assembly 52 and/or the second clamping claw assembly 53, and the rotation drive part 551 drives the transmission rod to rotate, to drive the first clamping claw assembly 52 and the second clamping claw assembly 53 to move toward or away from each other relative to the first rack 51.

In this embodiment, the transmission mechanism 552 is an implementation of a screw rod and nut mechanism.

The rotation torque of the rotation drive part 551 is transmitted to the transmission rod, and then through collaboration between the transmission rod and the thread, rotation of the transmission rod pushes or pulls, through the thread, the first clamping claw assembly 52 and the second clamping claw assembly 53 to move toward or away from each other relative to the first rack 51. Through the collaboration between the transmission rod and the thread, the precision of the linear motion may be controlled by using the spacing of the thread, the speed of the linear motion may be controlled by using the rotation speed of the transmission rod, and the distance of the linear motion may be controlled by using the number of rotations or the rotation arc length of the transmission rod. Therefore, it is relatively convenient to perform precise control, and the transmission efficiency and precision are high.

In an optional embodiment, two ends of the transmission rod respectively extend to the first clamping claw assembly 52 and the second clamping claw assembly 53, the thread on the transmission rod includes a first thread and a second thread that are respectively located in opposite directions on two sides, the thread of the first clamping claw assembly 52 adapts to the first thread, and the thread of the second clamping claw assembly 53 adapts to the second thread; and when the transmission rod rotates, the first thread drives the first clamping claw assembly 52 to move, and the second thread drives the second clamping claw assembly 53 to move, to cause the first clamping claw assembly 52 and the second clamping claw assembly 53 to move toward or away from each other relative to the first rack 51.

In this embodiment, the transmission rod is a structure that extends entirely to the first clamping claw assembly 52 and the second clamping claw assembly 53. The first clamping claw assembly 52 and the second clamping claw assembly 53 move toward or away from each other by using one transmission rod. The transmission rod has an external thread, and therefore can collaborate with the thread of the first clamping claw assembly 52. Herein, the transmission rod has two different threads, which are represented by a first thread and a second thread. When the transmission rod rotates, a rotation direction is specific. Therefore, to enable the first clamping claw assembly 52 and the second clamping claw assembly 53 to move toward or away from each other relative to the first rack 51, the first thread and the second thread are threads in opposite directions. Certainly, correspondingly, the thread of the first clamping claw assembly 52 and the thread of the second clamping claw assembly 53 are also opposite.

The rotation drive part 551 drives the transmission rod to rotate, and the first thread and the second thread that are in opposite directions collaborate with the first clamping claw assembly 52 and the second clamping claw assembly 53 respectively, so that the first clamping claw assembly 52 and the second clamping claw assembly 53 can move toward or away from each other relative to the first rack 51, to adjust a distance between the first clamping claw assembly 52 and the second clamping claw assembly 53 to adapt to a requirement for gripping the cells 11 of different sizes.

Certainly, in another optional embodiment, there may be two transmission rods, which separately collaborate with the first clamping claw assembly 52 and the second clamping claw assembly 53 through threads. There are also two rotation drive parts 551, which are respectively configured to drive the two transmission rods to rotate, to separately drive the first clamping claw assembly 52 and the second clamping claw assembly 53 to move. By comparison, in the solution of a single transmission rod, the structure is simple and easy to deploy, the moving rates of the first clamping claw assembly 52 and the second clamping claw assembly 53 are consistent, and the adjustment manner is simple and easy to operate. In the solution of two transmission rods, a setting manner is flexible, the first clamping claw assembly 52 and the second clamping claw assembly 53 can be separately controlled, a control and adjustment manner is flexible and variable, and different motion manners can be adjusted according to requirements of different application scenarios, which is highly adaptable.

In an optional embodiment, the first distance adjustment mechanism 55 further includes a first guide rail assembly 56, and the first clamping claw assembly 52 and/or the second clamping claw assembly 53 is slidably connected to the first rack 51 by using the first guide rail assembly 56.

In this embodiment, the first guide rail assembly 56 is a structure configured to enable the first clamping claw assembly 52 and/or the second clamping claw assembly 53 to slide with the first rack 51. There may be a plurality of implementations, for example, a protrusion and groove collaboration structure and a guide rail and slide block structure. The first clamping claw assembly 52 and/or the second clamping claw assembly 53 is slidably connected to the first rack 51 by using the first guide rail assembly 56, including three implementations: The first clamping claw assembly 52 is slidably connected to the first rack 51 by using the first guide rail assembly 56; the second clamping claw assembly 53 is slidably connected to the first rack 51 by using the first guide rail assembly 56; and the first clamping claw assembly 52 and the second clamping claw assembly 53 are both slidably connected to the first rack 51 by using the first guide rail assembly 56. The first clamping claw assembly 52 is slidably connected to the first rack 51 by using the first guide rail assembly 56, and a corresponding solution may be a manner of driving only the first clamping claw assembly 52 to move; the second clamping claw assembly 53 is slidably connected to the first rack 51 by using the first guide rail assembly 56, and a corresponding solution may be a manner of driving only the second clamping claw assembly 53 to move; and the first clamping claw assembly 52 and the second clamping claw assembly 53 are both slidably connected to the first rack 51 by using the first guide rail assembly 56, and a corresponding solution may be a manner of driving both the first clamping claw assembly 52 and the second clamping claw assembly 53 to move.

In the production line module for cell gripping provided in this embodiment of the present disclosure, because the first guide rail assembly 56 is disposed, movement of the first clamping claw assembly 52 and/or the second clamping claw assembly 53 can be facilitated, thereby reducing friction between the first clamping claw assembly and/or the second clamping claw assembly and the first rack 51, and having a guiding and limiting function for the movement.

In an optional embodiment, the first guide rail assembly 56 includes a guide rail fixed to the first rack 51, and a slide block fixed to the first clamping claw assembly 52 and/or the second clamping claw assembly 53, the guide rail extends along a linear direction in which the first clamping claw assembly 52 and the second clamping claw assembly 53 move toward or away from each other relative to the first rack 51, and the slide block is slidably connected to the guide rail.

In this embodiment, the first guide rail assembly 56 is a guide rail and slide block structure. In some other embodiments, the slide block may be fixed to the first rack 51, and the guide rail may be fixed to the first clamping claw assembly 52 and/or the second clamping claw assembly 53.

In an optional embodiment, the first distance adjustment mechanism 55 further includes a distance measurement member 57, and the distance measurement member 57 is configured to measure a displacement amount generated when the first clamping claw assembly 52 and the second clamping claw assembly 53 move toward or away from each other relative to the first rack 51.

In this embodiment, the distance measurement member 57 is a component or element that can implement distance measurement, for example, a distance meter or a magnetic grating ruler.

To accurately learn a state position to which the first distance adjustment mechanism 55 adjusts the spacing between the first clamping claw assembly 52 and the second clamping claw assembly 53, a distance measurement member 57 may be disposed. A displacement amount generated when the first clamping claw assembly 52 and the second clamping claw assembly 53 move toward or away from each other relative to the first rack 51 may be measured by using the distance measurement member 57, to perform more accurate adjustment. The distance measurement member 57 may further include a function of directly measuring a distance between the first clamping claw assembly 52 and the second clamping claw assembly 53.

For example, the distance measurement member 57 measures the first displacement by which the first clamping claw assembly 52 and the second clamping claw assembly 53 need to move toward each other relative to the first rack 51. Herein, it should be additionally noted that, the first displacement needs to adapt to the width or the length of the cell 11, and the first displacement should be greater than or equal to the width or the length of the cell 11. For example, when the first distance adjustment mechanism 55 includes the first guide rail assembly 56, the first clamping claw assembly 52 may move toward the second clamping claw assembly 53 by using the first guide rail assembly 56, or the second clamping claw assembly 53 may move toward the first clamping claw assembly 52 by using the first guide rail assembly 56, or the first clamping claw assembly 52 may move toward the second clamping claw assembly 53 by using the first guide rail assembly 56 and the second clamping claw assembly 53 may move toward the first clamping claw assembly 52 by using the first guide rail assembly 56, until the first clamping claw assembly 52 and the second clamping claw assembly 53 move toward each other by the first displacement relative to the first rack 51. In this case, when the distance measurement member 57 measures the arrival of the first displacement between the first clamping claw assembly 52 and the second clamping claw assembly 53, the clamping drive part 54 is configured to drive the first clamping member 521 and/or the second clamping member 531 to move, to cause the first clamping member 521 and the second clamping member 531 to move toward each other, where the first clamping member 521 and the second clamping member 531 collaborate with each other to clamp the cell 11.

In an optional embodiment, referring to FIG. 12 and FIG. 13, the first clamping member 521 and/or the second clamping member 531 includes a fixation bracket 5211, an abutment block 5212, and a deformation member 5213, and the deformation member 5213 is located between the abutment block 5212 and the fixation bracket 5211, to provide a buffer force pushing the abutment block 5212 and the fixation bracket 5211 apart.

In this embodiment, that the first clamping member 521 and/or the second clamping member 531 includes means that only the first clamping member 521 includes, only the second clamping member 531 includes, or both the first clamping member 521 and the second clamping member 531 include. The deformation member 5213 can be deformed when under pressure, and can be recovered when the pressure is released. The deformation property can absorb a hard contact force, so that contact between components is flexible contact, that is, the first clamping member 521 and/or the second clamping member 531 flexibly grips the cell 11. A buffer force of the deformation member 5213 is a restoration force that restores its own shape and that is generated after its own deformation. The deformation member 5213 may be a component having elasticity such as rubber or a spring.

By disposing the deformation member 5213, when the first clamping member 521 and the second clamping member 531 clamp the cell 11, the abutment block 5212 receives a reaction force from a contact surface of the cell 11, and transmits the reaction force to the deformation member 5213. The deformation member 5213 is subject to the force and deformed, so that the abutment block 5212 may be displaced toward the deformation member 5213, to further absorb the reaction force. Meanwhile, the deformation member 5213 that is deformed generates a buffer force pushing the abutment block 5212 to the cell 11, to ensure that the abutment block 5212 clamps the cell 11. Further, flexible gripping is implemented, to avoid damage to the surface of the cell 11 or deformation of the cell 11 after being clamped.

In an optional embodiment, referring to FIG. 12 and FIG. 13, the first clamping member 521 and/or the second clamping member 531 includes a plurality of abutment blocks 5212 and a plurality of deformation members 5213 that are disposed corresponding to each other, and the plurality of abutment blocks 5212 is disposed abreast.

In this embodiment, correspondingly disposed means that the abutment blocks 5212 and the deformation members 5213 are correspondingly disposed, that is, each abutment block 5212 may match one deformation member 5213, to ensure flexible contact between the abutment block 5212 and the cell 11. That the plurality of abutment blocks 5212 is disposed abreast means that the plurality of abutment blocks 5212 has consistent extension directions and is disposed in a row along another direction. Referring to FIG. 11, as an example, abutment surfaces of the plurality of abutment blocks 5212 all face accommodating positions of the to-be-gripped cells 11, and the plurality of abutment blocks 5212 are arranged in a row along a direction in which the to-be-gripped cells 11 may be arranged, to ensure that the entire row of cells 11 can be gripped at a time. The deformation members 5213 and the abutment block 5212 are correspondingly disposed. Therefore, based on that the plurality of abutment blocks 5212 are disposed abreast, one deformation member 5213 may be further connected to each of the abutment blocks 5212. In this way, the plurality of deformation members 5213 may also be disposed abreast.

The plurality of abutment blocks 5212 is disposed, to flexibly and adaptively grip cells 11 of different sizes and different quantities.

Based on disposition of the plurality of abutment blocks 5212, design verification needs to be performed on a contact width between each abutment block 5212 and the cell 11 and a gap between adjacent abutment blocks 5212. When the gap between adjacent abutment blocks 5212 is greater than or equal to the width of a single cell 11, exactly at least one cell 11 may be located in the gap and cannot be gripped. When the width of the abutment block 5212 is greater than that of a single cell 11, each abutment block 5212 may be abutted against at least two cells 11. In this way, if the sizes of the two cells 11 that are touched have an offset, the two cells are subject to an uneven force, and cannot be gripped flexibly and correctly. Therefore, to avoid the foregoing problem, in this embodiment of the present disclosure, the sizes of the plurality of abutment blocks 5212 are designed as follows:
Specifically, in an optional embodiment, gaps between adjacent abutment blocks 5212 are less than a width of a single cell 11 and greater than or equal to an interference fit gap.

In this embodiment, the gap between adjacent abutment blocks 5212 is a gap distance between two adjacent abutment blocks 5212 along the direction in which the two adjacent abutment blocks are arranged. The width of the single cell 11 is a width occupied by the single cell 11 along the direction in which the plurality of abutment blocks 5212 is arranged. The interference fit gap is a minimum fit gap that can be achieved when two adjacent abutment blocks 5212 do not interfere with each other.

Through the arrangement in which gaps between adjacent abutment blocks 5212 are less than a width of a single cell 11 and greater than or equal to an interference fit gap, the gap between adjacent abutment blocks 5212 is insufficient to accommodate one cell 11, thereby ensuring that each cell 11 is abutted against and clamped by the abutment blocks 5212.

In an optional embodiment, widths of the plurality of abutment blocks 5212 are less than or equal to the width of the single cell 11.

In this way, when a cell 11 is clamped, each abutment block 5212 may abut one cell 11 alone, or each cell 11 is abutted by at least two abutment blocks 5212. When each abutment block 5212 may abut one cell 11 alone, each cell 11 is clamped by one abutment block 5212 alone, and a problem that the cell 11 is subject to an uneven force and cannot be clamped does not occur. When each cell 11 is abutted by at least two abutment blocks 5212, when sizes of adjacent cells 11 have an offset, at least one of the two abutment blocks 5212 corresponding to each cell 11 may perform normal size matching on the cell, which can also avoid the problem that the cell 11 is subject to an uneven force and cannot be clamped.

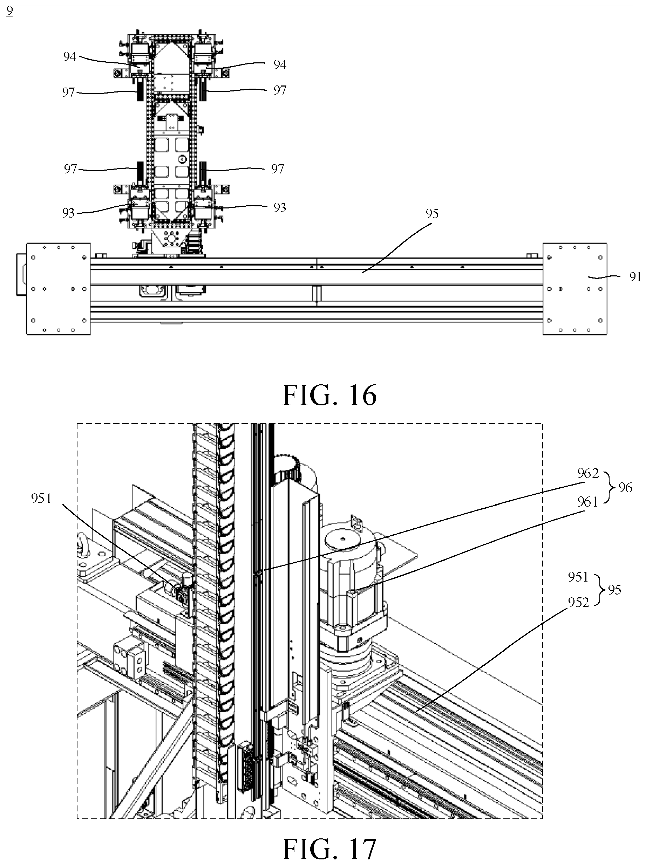

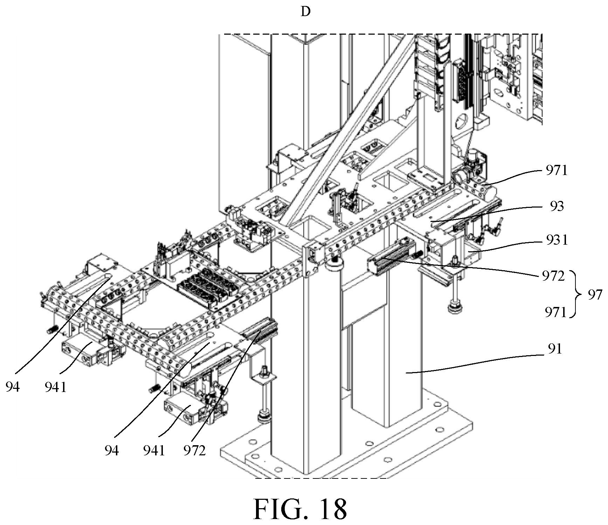

In an optional embodiment, referring to FIG. 4, FIG. 5, FIG. 14, FIG. 17, and FIG. 18, the tray gripping apparatus 9 includes a second rack 91, a third clamping claw assembly 93, a fourth clamping claw assembly 94, a first drive mechanism 95, a second drive mechanism 96, and a second distance adjustment mechanism 97, where the third clamping claw assembly 93 is disposed on the second rack 91 and has a third clamping member 931; the fourth clamping claw assembly 94 is disposed on the second rack 91 and has a fourth clamping member 941, where the third clamping member 931 and the fourth clamping member 941 are disposed opposite to each other and at an interval; the first drive mechanism 95 is disposed between the second rack 91 and the third clamping claw assembly 93 and between the second rack 91 and the fourth clamping claw assembly 94, and configured to drive the third clamping member 931 and the fourth clamping member 941 to simultaneously move between the first operation region 41 and the second operation region 42; the second drive mechanism 96 is disposed between the first drive mechanism 95 and the third clamping claw assembly 93 and between the first drive mechanism 95 and the fourth clamping claw assembly 94, and configured to drive the third clamping member 931 and the fourth clamping member 941 to simultaneously move toward or away from the tray 10; and the second distance adjustment mechanism 97 is disposed between the second drive mechanism 96 and the third clamping claw assembly 93 and/or between the second drive mechanism 96 and the fourth clamping claw assembly 94, and configured to drive the third clamping member 931 and the fourth clamping member 941 to move toward or away from each other relative to the second drive mechanism 96, to adjust a distance between the third clamping member 931 and the fourth clamping member 941, to cause the third clamping member 931 and the fourth clamping member 941 to collaborate with each other to grip the tray 10.

In the embodiments of the present disclosure, the third clamping member 931 and the fourth clamping member 941 are disposed opposite to each other and at an interval. The third clamping member 931 and the fourth clamping member 941 may each be a structure of a robotic arm, and the third clamping member 931 and the fourth clamping member 941 collaborate with each other to grip the tray 10; or the third clamping member 931 and the fourth clamping member 941 may each be a plate-shaped structure, and the third clamping member 931 and the fourth clamping member 941 collaborate with each other to grip the tray 10, which is not limited in this embodiment of the present disclosure. In addition, the third clamping member 931 and the fourth clamping member 941 may alternatively be different types of structures.

In the embodiments of the present disclosure, the first drive mechanism 95 is disposed between the second rack 91 and the third clamping claw assembly 93 and between the second rack 91 and the fourth clamping claw assembly 94, and configured to drive the third clamping member 931 and the fourth clamping member 941 to move between the first operation region 41 and the second operation region 42. That is, the first drive mechanism 95 drives the third clamping member 931 and the fourth clamping member 941 to move together with the same moving displacement. In addition, the first drive mechanism 95 drives the third clamping member 931 and the fourth clamping member 941 to move between the first operation region 41 and the second operation region 42. That is, the first drive mechanism 95 drives the third clamping member 931 and the fourth clamping member 941 to move from the first operation region 41 to the second operation region 42, or to be transported from the second operation region 42 to the first operation region 41.

In the embodiments of the present disclosure, the second drive mechanism 96 is disposed between the first drive mechanism 95 and the third clamping claw assembly 93 and between the first drive mechanism 95 and the fourth clamping claw assembly 94, and configured to drive the third clamping member 931 and the fourth clamping member 941 to simultaneously move toward or away from the tray 10. That is, the second drive mechanism 96 drives the third clamping member 931 and the fourth clamping member 941 to move together with the same moving displacement. In addition, the second drive mechanism 96 drives the third clamping member 931 and the fourth clamping member 941 to simultaneously move toward or away from the tray 10. That is, the second drive mechanism 96 drives the third clamping member 931 and the fourth clamping member 941 to simultaneously move toward the tray 10, to subsequently grip the tray 10, or the second drive mechanism 96 drives the third clamping member 931 and the fourth clamping member 941 to simultaneously move away from the tray 10.

In the embodiments of the present disclosure, the second distance adjustment mechanism 97 is disposed between the second drive mechanism 96 and the third clamping claw assembly 93 and/or between the second drive mechanism 96 and the fourth clamping claw assembly 94, and configured to drive the third clamping member 931 and the fourth clamping member 941 to move toward or away from each other relative to the second drive mechanism 96, to adjust a distance between the third clamping member 931 and the fourth clamping member 941. That is, if the second distance adjustment mechanism 97 is disposed only between the second drive mechanism 96 and the third clamping claw assembly 93, only the third clamping member 931 is driven to move toward or move away from the fourth clamping member 941 relative to the second drive mechanism 96; if the second distance adjustment mechanism 97 is disposed only between the second drive mechanism 96 and the fourth clamping claw assembly 94, only the fourth clamping member 941 is driven to move toward or move away from the fourth clamping member 941 relative to the second drive mechanism 96; or if the second distance adjustment mechanism 97 is disposed between the second drive mechanism 96 and the third clamping claw assembly 93 and also disposed between the second drive mechanism 96 and the fourth clamping claw assembly 94, the second distance adjustment mechanism 97 is configured to drive the third clamping member 931 and the fourth clamping member 941 to move toward or away from each other relative to the second drive mechanism 96, to finally adjust a distance between the third clamping member 931 and the fourth clamping member 941.

In the embodiments of the present disclosure, the second distance adjustment mechanism 97 is configured to drive the third clamping member 931 and the fourth clamping member 941 to move toward or away from each other relative to the second drive mechanism 96, to adjust a distance between the third clamping member 931 and the fourth clamping member 941. The adjusted distance needs to adapt to an outer contour of the tray 10. The adjusted distance may be greater than or equal to a width or a length of the tray 10.

In the production line module for cell gripping provided in this embodiment of the present disclosure, the tray gripping apparatus 9 is provided with the second distance adjustment mechanism 97, and the second distance adjustment mechanism 97 can drive the third clamping member 931 and the fourth clamping member 941 to move toward or away from each other relative to the second drive mechanism 96, to adjust a distance between the third clamping member 931 and the fourth clamping member 941. In this way, the second distance adjustment mechanism 97 may be adapted to grip trays 10 of different sizes, as long as the distance between the third clamping member 931 and the fourth clamping member 941 is correspondingly adjusted, thereby improving universality of the tray gripping apparatus 9. After the third clamping member 931 and the fourth clamping member 941 collaborate with each other to grip the tray 10, the second drive assembly drives the third clamping member 931 and the fourth clamping member 941 to simultaneously move away from the tray 10, and the first drive member 951 drives the third clamping member 931 and the fourth clamping member 941 to move from the first operation region 41 to the second operation region 42. In this case, the second distance adjustment mechanism 97 drives the third clamping member 931 and the fourth clamping member 941 to move away from each other relative to the second drive mechanism 96, to release the tray 10 to the second operation region 42. In this case, the third clamping member 931 and the fourth clamping member 941 may be located at the second operation region 42, or may reach the first operation region 41 under drive of the first drive mechanism 95, to grip the tray 10 again.

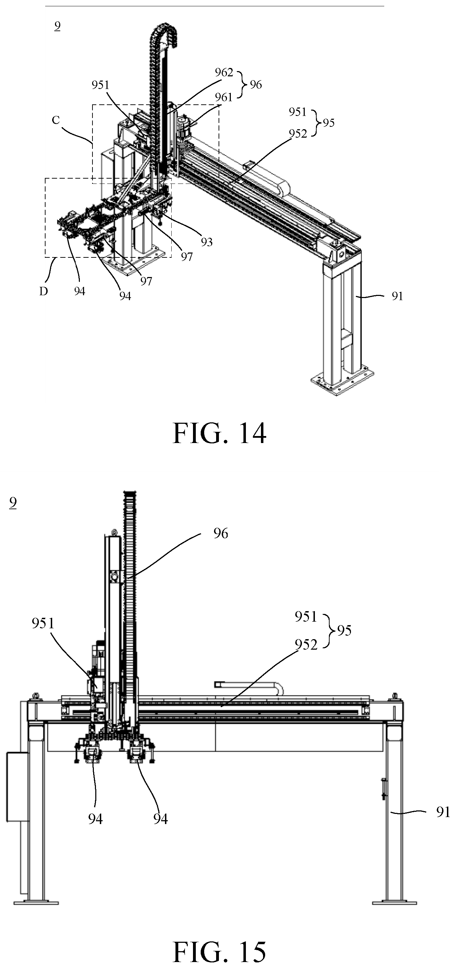

In an optional embodiment, referring to FIG. 14, FIG. 15, FIG. 16, and FIG. 17, the first drive mechanism 95 includes a first drive member 951 and a second guide rail assembly 952, the third clamping claw assembly 93 and the fourth clamping claw assembly 94 are both connected to the second guide rail assembly 952, the first drive member 951 is connected to the second guide rail assembly 952, the first drive member 951 drives the second guide rail assembly 952, and the second guide rail assembly 952 simultaneously drives the third clamping member 931 and the fourth clamping member 941 to move between the first operation region 41 and the second operation region 42.

In the embodiments of the present disclosure, the first drive member 951 may be a linear motor, the second guide rail assembly 952 is directly connected to the linear motor, and the linear motor directly and simultaneously drives the third clamping member 931 and the fourth clamping member 941 to move between the first operation region 41 and the second operation region 42. The first drive member 951 may be a motor whose output is torque. Because the motor whose output is torque cannot directly drive the second guide rail assembly 952, a transmission mechanism, such as a rack and pinion mechanism, a screw rod and nut mechanism, or a belt transmission mechanism, may be disposed between the first drive member 951 and the second guide rail assembly 952. The first drive member 951 drives the transmission mechanism, the transmission mechanism drives the second guide rail assembly 952, and the second guide rail assembly 952 then drives the third clamping member 931 and the fourth clamping member 941 to move between the first operation region 41 and the second operation region 42.

In the production line module for cell gripping provided in this embodiment of the present disclosure, because the second guide rail assembly 952 is disposed, and the first drive member 951 is connected to the second guide rail assembly 952, movement of the third clamping member 931 and the fourth clamping member 941 between the first operation region 41 and the second operation region 42 can be facilitated, thereby reducing movement friction, and having a guiding and limiting function for the movement.

In an optional embodiment, the second guide rail assembly 952 includes a second guide rail disposed on the second rack 91 and a second slide block disposed on the third clamping claw assembly 93 and the fourth clamping claw assembly 94, the second guide rail extends along a direction in which the first operation region 41 and the second operation region 42 are disposed, the first drive member 951 drives the second slide block, and the second slide block slides in the second guide rail.

In the embodiments of the present disclosure, one same second slide block may be disposed on the third clamping claw assembly 93 and the fourth clamping claw assembly 94, that is, the second slide block is connected to both the third clamping claw assembly 93 and the fourth clamping claw assembly 94; or different second slide blocks may be disposed on the third clamping claw assembly 93 and the fourth clamping claw assembly 94. That is, one second slide block is disposed on each of the third clamping claw assembly 93 and the fourth clamping claw assembly 94. However, when the first drive member 951 drives the second slide block, the second slide blocks disposed corresponding to the third clamping claw assembly 93 and the fourth clamping claw assembly 94 respectively need to move in the second guide rail together.

Certainly, in this embodiment of the present disclosure, the second guide rail assembly 952 may alternatively include a second slide block disposed on the second rack 91 and a second guide rail disposed on the third clamping claw assembly 93 and the fourth clamping claw assembly 94, the second guide rail extends along a direction in which the first operation region 41 and the second operation region 42 are disposed, the first drive member 951 drives the second slide block, and the second slide block moves in the second guide rail.

In an optional embodiment, referring to FIG. 4, FIG. 5, FIG. 14, and FIG. 17, the second drive mechanism 96 includes a second drive member 961 and a third guide rail assembly 962, both the third clamping claw assembly 93 and the fourth clamping claw assembly 94 are connected to the third guide rail assembly 962, the second drive member 961 is connected to the third guide rail assembly 962, the second drive member 961 drives the third guide rail assembly 962, and the third guide rail assembly 962 drives the third clamping member 931 and the fourth clamping member 941 to simultaneously move toward or away from the tray 10.

In the embodiments of the present disclosure, the second drive member 961 may be a linear motor, the second guide rail assembly 952 is directly connected to the linear motor, and the linear motor directly and simultaneously drives the third clamping member 931 and the fourth clamping member 941 to move toward or away from the tray 10 simultaneously. The second drive member 961 may be a motor whose output is torque. Because the motor whose output is torque cannot directly drive the third guide rail assembly 962, a transmission mechanism, such as a rack and pinion mechanism, a screw rod and nut mechanism, or a belt transmission mechanism, may be disposed between the second drive motor and the third guide rail assembly 962. The second drive member 961 drives the transmission mechanism, the transmission mechanism drives the third guide rail assembly 962, and the third guide rail assembly 962 then drives the third clamping member 931 and the fourth clamping member 941 to move toward or away from the tray 10 simultaneously.

In the production line module for cell gripping provided in this embodiment of the present disclosure, because the third guide rail assembly 962 is disposed, and the second drive member 961 is connected to the third guide rail assembly 962, simultaneous movement of the third clamping member 931 and the fourth clamping member 941 toward or away from the tray 10 can be facilitated, thereby reducing movement friction, and having a guiding and limiting function for the movement.

In an optional embodiment, the third guide rail assembly 962 includes a third guide rail disposed on the first drive mechanism 95 and a third slide block disposed on the third clamping claw assembly 93 and the fourth clamping claw assembly 94, the second guide rail extends in a direction moving toward or away from the tray 10, the second drive member 961 drives the third slide block, and the third slide block slides in the third guide rail.

In the embodiments of the present disclosure, one same third slide block may be disposed on the third clamping claw assembly 93 and the fourth clamping claw assembly 94, that is, the third slide block is connected to both the third clamping claw assembly 93 and the fourth clamping claw assembly 94; or different third slide blocks may be disposed on the third clamping claw assembly 93 and the fourth clamping claw assembly 94. That is, one third slide block is disposed on each of the third clamping claw assembly 93 and the fourth clamping claw assembly 94. However, when the second drive member 961 drives three slide blocks, the third slide blocks disposed corresponding to the third clamping claw assembly 93 and the fourth clamping claw assembly 94 respectively need to move in the third guide rail together.

Certainly, in this embodiment of the present disclosure, the third guide rail assembly 962 may alternatively include a third slide block disposed on the first drive mechanism 95 and a third guide rail disposed on the third clamping claw assembly 93 and the fourth clamping claw assembly 94, the third guide rail extends in a direction moving toward or away from the tray 10, the second drive member 961 drives the third slide block, and the third slide block moves in the third guide rail.

In an optional embodiment, referring to FIG. 4, FIG. 5, FIG. 14, and FIG. 17, the second distance adjustment mechanism 97 includes a third drive member 971 and a fourth guide rail assembly 972, the third clamping claw assembly 93 and the fourth clamping claw assembly 94 are connected to the fourth guide rail assembly 972, the third drive member 971 is connected to the fourth guide rail assembly 972, the third drive member 971 drives the fourth guide rail assembly 972, and the fourth guide rail assembly 972 drives the third clamping member 931 and the fourth clamping member 941 to move toward or away from each other relative to the second drive mechanism 96.

In the embodiments of the present disclosure, the third drive member 971 may be a linear motor, the fourth guide rail assembly 972 is directly connected to the linear motor, and the linear motor directly and simultaneously drives the third clamping member 931 and the fourth clamping member 941 to move toward or away from each other relative to the second drive mechanism 96. The third drive member 971 may be a motor whose output is torque. Because the motor whose output is torque cannot directly drive the fourth guide rail assembly 972, a transmission mechanism, such as a rack and pinion mechanism, a screw rod and nut mechanism, or a belt transmission mechanism, may be disposed between the third drive member 971 and the fourth guide rail assembly 972. The third drive member 971 drives the transmission mechanism, the transmission mechanism drives the fourth guide rail assembly 972, and the third guide rail assembly 962 then drives the third clamping member 931 and the fourth clamping member 941 to move toward or away from each other.

In the production line module for cell gripping provided in this embodiment of the present disclosure, because the fourth guide rail assembly 972 is disposed, and the third drive member 971 is connected to the fourth guide rail assembly 972, movement of the third clamping member 931 and the fourth clamping member 941 toward or away from each other can be facilitated, thereby reducing movement friction, and having a guiding and limiting function for the movement.

In an optional embodiment, the fourth guide rail assembly 972 includes a fourth guide rail disposed on the second drive mechanism 96 and a fourth slide block disposed on the third clamping claw assembly 93 and the fourth clamping claw assembly 94, the fourth guide rail extends along a direction in which the third clamping member 931 and the fourth clamping member 941 are disposed opposite to each other, the third drive member 971 drives the fourth slide block, and the fourth slide block slides in the fourth guide rail.

In the embodiments of the present disclosure, one same fourth slide block may be disposed on the third clamping claw assembly 93 and the fourth clamping claw assembly 94, that is, the fourth slide block is connected to both the third clamping claw assembly 93 and the fourth clamping claw assembly 94; or different fourth slide blocks may be disposed on the third clamping claw assembly 93 and the fourth clamping claw assembly 94. That is, one fourth slide block is disposed on each of the third clamping claw assembly 93 and the fourth clamping claw assembly 94. However, when the third drive member 971 drives the fourth slide block, the fourth slide block slides in the fourth guide rail.

Certainly, in this embodiment of the present disclosure, the fourth guide rail assembly 972 may alternatively include a fourth slide block disposed on the second drive mechanism 96 and a fourth guide rail disposed on the third clamping claw assembly 93 and the fourth clamping claw assembly 94, the fourth guide rail extends along a direction in which the third clamping member 931 and the fourth clamping member 941 are disposed opposite to each other, the third drive member 971 drives the fourth slide block, and the fourth slide block moves in the fourth guide rail.

In the embodiments of the present disclosure, to facilitate detachment of the third clamping claw assembly 93 and the fourth clamping claw assembly 94 from the fourth guide rail, and facilitate maintenance and rearrangement, in an implementable manner provided in this embodiment of the present disclosure, disassembling parts are provided at two ends of the fourth guide rail, the disassembling parts are also slotted, and the slots provided in the disassembling parts are relatively large in size compared with the slots of the guide rails adapted to the slide blocks. In this way, the third clamping claw assembly and the fourth clamping claw assembly can be quickly disassembled from the fourth guide rail when the fourth slide block reaches the disassembling part.

In an optional embodiment, referring to FIG. 4, FIG. 5, FIG. 14, and FIG. 17, there are two second distance adjustment mechanisms 97, where one second distance adjustment mechanism is disposed between the second drive mechanism 96 and the third clamping claw assembly 93, and the other second distance adjustment mechanism is disposed between the second drive mechanism 96 and the fourth clamping claw assembly 94, to drive the third clamping member 931 and the fourth clamping member 941 respectively, to drive the third clamping member 931 and the fourth clamping member 941 to move toward or away from each other relative to the second drive mechanism 96.

In the production line module for cell gripping provided in this embodiment of the present disclosure, if there is one second distance adjustment mechanism 97, or the second distance adjustment mechanism is disposed between the second drive mechanism 96 and the third clamping claw assembly 93, only the third clamping member 931 can be driven to move toward or move away from the fourth clamping member 941 relative to the second drive mechanism 96; or the second distance adjustment mechanism is disposed between the second drive mechanism 96 and the fourth clamping claw assembly 94, only the fourth clamping member 941 can be driven to move toward or move away from the third clamping member 931 relative to the second drive mechanism 96; or the second distance adjustment mechanism is disposed both between the second drive mechanism 96 and the third clamping claw assembly 93 and between the second drive mechanism 96 and the fourth clamping claw assembly 94, displacements by which the third clamping member 931 and the fourth clamping member 941 move toward or away from each other relative to the second drive mechanism 96 during working are the same. To cause the displacements by which the third clamping member 931 and the fourth clamping member 941 move toward or away from each other relative to the second drive mechanism 96 during working to be different, in other words, to enable both the third clamping member 931 and the second clamping member to independently move relative to the second drive mechanism 96, two second distance adjustment mechanisms 97 are disposed, where one second distance adjustment mechanism is disposed between the second drive mechanism 96 and the third clamping claw assembly 93, and the other second distance adjustment mechanism is disposed between the second drive mechanism 96 and the fourth clamping claw assembly 94, to drive the third clamping member 931 and the fourth clamping member 941 respectively, to drive the third clamping member 931 and the fourth clamping member 941 to move toward or away from each other relative to the second drive mechanism 96.

In an optional embodiment, referring to FIG. 4, FIG. 5, FIG. 14, and FIG. 17, a plurality of third clamping claw assemblies 93 and a plurality of fourth clamping claw assemblies 94 are provided, the plurality of third clamping claw assemblies 93 and the plurality of fourth clamping claw assemblies 94 are disposed in a one-to-one correspondence, and each of the third clamping claw assemblies 93 and the fourth clamping claw assemblies 94 is correspondingly provided with the second distance adjustment mechanism 97.

In the embodiments of the present disclosure, a plurality of third clamping claw assemblies 93 and a plurality of fourth clamping claw assemblies 94 are provided, the plurality of third clamping claw assemblies 93 and the plurality of fourth clamping claw assemblies 94 are disposed in a one-to-one correspondence. In an implementable manner provided by this embodiment of the present disclosure, there are two third clamping claw assemblies 93, there are two fourth clamping claw assemblies 94, and the two third clamping claw assemblies 93 and the two fourth clamping claw assemblies 94 are disposed in a one-to-one correspondence, and are formed into a rectangle, to grip the tray 10 whose outer contour is rectangular. Herein, it should be noted that, the plurality of third clamping claw assemblies 93 and the plurality of fourth clamping claw assemblies 94 may alternatively be formed into another shape, as long as it is ensured that the tray 10 can be gripped.

In the production line module for cell gripping provided in this embodiment of the present disclosure, by disposing the plurality of third clamping claw assemblies 93 and the plurality of fourth clamping claw assemblies 94, the process of gripping the tray 10 is more stable. In addition, a plurality of trays 10 may be gripped simultaneously, to improve gripping efficiency. On the basis of this, a second distance adjustment mechanism 97 is correspondingly provided for each of the third clamping claw assemblies 93 and the fourth clamping claw assemblies 94, to adapt to trays 10 of different sizes and improve universality of the tray gripping apparatus 9.

The foregoing embodiments are for description of the technical solutions of the present disclosure only rather than for limiting the present disclosure. Although the present disclosure has been described in detail with reference to the foregoing embodiments, persons of ordinary skill in the art should appreciate that they can still make modifications to the technical solutions described in the embodiments or make equivalent rearrangements to some or all technical features thereof without departing from the scope of the technical solutions of the embodiments of the present disclosure. All such modifications and equivalent rearrangements shall fall within the scope of specification of the present disclosure. In particular, the various technical features mentioned in the various embodiments can be combined in any way provided that there is no structural conflict. The present disclosure is not limited to the specific embodiments disclosed herein.

The computer-readable storage medium may be a memory such as a ferromagnetic random access memory (FRAM), a Read Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disc, or a Compact Disc Read-Only Memory (CD-ROM).

A person skilled in the art should understand that embodiments of the present disclosure may be provided as a method, a system, or a computer program product. Therefore, the present disclosure may use a form of hardware embodiments, software embodiments, or embodiments with a combination of software and hardware. In addition, the present disclosure may take the form of a computer program product implemented on one or more computer-usable storage media (including, but not limited to: a magnetic memory and an optical memory) including computer-usable program code.

The present disclosure is described with reference to flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The foregoing descriptions are merely preferred embodiments of the present disclosure, and are not intended to limit the protection scope of the present disclosure.

### Industrial applicability

In the embodiments of the present disclosure, the robot can obtain the first image data by sending the first photographing request to the stand camera, obtain the gripping position and the photographing position based on the first image data, send the second photographing request to the gripper camera based on the photographing position to obtain the second image data, and obtain the arrangement parameters based on the second image data. Therefore, after obtaining the gripping position and the arrangement parameters, the robot may move to the gripping position, thereby improving gripping accuracy, adjust the gripping angle by using the arrangement parameters, and control the cell gripping apparatus to firmly clamp the target column of cells. The robot performs adjustment based on the gripping angle, so that the robot can grip cells of different sizes, thereby improving compatibility of cell gripping.

## Claims

1. A control method for a cell gripping system, wherein the cell gripping system comprises a robot, a stand camera, and a gripper camera, the robot comprises a cell gripping apparatus, the gripper camera is located on the cell gripping apparatus, and the method comprises:
sending, by the robot, a first photographing request to the stand camera;
obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot;
moving, by the robot, to the photographing position and sending a second photographing request to the gripper camera;
obtaining, by the gripper camera, second image data in response to the second photographing request, determining, based on the second image data, arrangement parameters for the target column of cells, and sending the arrangement parameters to the robot; and
moving, by the robot, to the gripping position, adjusting a gripping angle based on the arrangement parameters, and controlling a cell gripping apparatus to firmly clamp the target column of cells, to complete gripping.

2. The control method according to claim 1, wherein the system further comprises a controller, and the sending, by the robot, a first photographing request to the stand camera comprises:
sending, by the controller, a gripping instruction to the robot in response to a received gripping operation; and
sending, by the robot, the first photographing request to the stand camera in response to the gripping instruction.

3. The control method according to claim 1 or 2, wherein the obtaining, by the stand camera in response to the first photographing request, first image data containing to-be-gripped cells, determining, based on the first image data, a gripping position for a target column of cells among the to-be-gripped cells and a photographing position for the target column of cells, and sending the gripping position and the photographing position to the robot comprises:
photographing, by the stand camera, in response to the first photographing request, to obtain the first image data containing the to-be-gripped cells;
determining, by the stand camera based on the first image data, whether the target column of cells satisfies a grippable condition; and
determining, by the stand camera based on the first image data, a gripping position for the target column of cells and a photographing position for the target column of cells when the target column of cells satisfies the grippable condition, and sending the gripping position and the photographing position to the robot.

4. The control method according to any one of claims 1 to 3, wherein the determining, by the stand camera based on the first image data, a gripping position for the target column of cells and a photographing position for the target column of cells comprises:
determining, by the stand camera based on the first image data, a gripping position for the target column of cells and a photographing position for a single cell of the target column of cells.

5. The control method according to any one of claims 1 to 4, wherein after the moving, by the robot, to the gripping position, adjusting a gripping angle based on the arrangement parameters, and controlling a cell gripping apparatus to firmly clamp the target column of cells, to complete gripping, the method further comprises:
sending, by the robot, a gripping complete instruction of the target column of cells to the stand camera;
determining, by the stand camera based on the first image data, a next target column of cells from the to-be-gripped cells in response to the gripping complete instruction, and determining a gripping position of the next target column of cells and a photographing position of the next target column of cells; and
sending, by the stand camera, the gripping position of the next target column of cells and the photographing position of the next target column of cells to the robot, to complete a process of gripping the next target column of cells, until all columns of the to-be-gripped cells are gripped completely.

6. The control method according to any one of claims 1 to 5, wherein after the moving, by the robot, to the gripping position, adjusting a gripping angle based on the arrangement parameters, and controlling a cell gripping apparatus to firmly clamp the target column of cells, to complete gripping, the method further comprises:
returning to perform the sending, by the robot, a first photographing request to the stand camera.

7. The control method according to claim 3, wherein the determining, based on the first image data, whether the target column of cells satisfies a grippable condition comprises:
performing point cloud preprocessing on the first image data, to obtain first point cloud preprocessed data; and
determining whether the target column of cells satisfies the grippable condition according to the first point cloud preprocessed data.

8. The control method according to claim 7, wherein the determining whether the target column of cells satisfies the grippable condition according to the first point cloud preprocessed data comprises:
determining whether the to-be-gripped cells are empty according to the first point cloud preprocessed data;
determining that the to-be-gripped cells do not satisfy the grippable condition when determining that the to-be-gripped cells are empty; and
determining whether the target column of cells satisfies the grippable condition based on the first point cloud preprocessed data when determining that the to-be-gripped cells are not empty.

9. The control method according to claim 8, wherein the determining whether the target column of cells satisfies the grippable condition based on the first point cloud preprocessed data comprises:
extracting the first point cloud preprocessed data, to obtain point cloud data containing the target column of cells;
determining a spacing between adjacent cells and a height of each cell in the point cloud data containing the target column of cells;
determining that the target column of cells satisfies the grippable condition when the spacings between the adjacent cells all fall within a preset spacing range and the heights of the cells all fall within a preset height range; and
determining that the target column of cells does not satisfy the grippable condition when at least one of the spacings between the adjacent cells does not fall within the preset spacing range and/or it is determined that at least one of the heights of the cells does not fall within the preset height range.

10. The control method according to any one of claims 1 to 9, wherein the determining, based on the first image data, a gripping position for a target column of cells among the to-be-gripped cells and a photographing position for the target column of cells comprises:
calculating a center point of the target column of cells based on point cloud data containing the target column of cells and being in the data obtained by performing point cloud preprocessing on the first image data, and determining the center point of the target column of cells as the gripping position; and
calculating a center point of a single cell of the target column of cells based on the point cloud data containing the target column of cells, and determining the center point of the single cell as the photographing position.

11. The control method according to claim 10, wherein the method further comprises:
determining an orientation of the target column of cells based on the point cloud data containing the target column of cells, wherein
the orientation of the target column of cells comprises: a horizontal direction and a vertical direction; the horizontal direction means that the target column of cells is parallel to a preset coordinate axis; and the vertical direction means that the target column of cells is perpendicular to the preset coordinate axis; and
sending the orientation of the target column of cells to the robot when sending the gripping position to the robot.

12. The control method according to claim 11, wherein the moving, by the robot, to the photographing position and sending a second photographing request to the gripper camera comprises:
moving, by the robot, to the photographing position, controlling a direction of the cell gripping apparatus based on the orientation of the target column of cells, and sending the second photographing request to the gripper camera.

13. The control method according to any one of claims 1 to 12, wherein when the photographing position is a photographing position of a single cell of the target column of cells, the determining, based on the second image data, arrangement parameters for the target column of cells, and sending the arrangement parameters to the robot comprises:
extracting a side length, an orientation, and a polarity of the single cell based on the second image data; and
sending the side length, the orientation, and the polarity of the single cell to the robot,
wherein
the arrangement parameters comprise: the side length, the orientation, and the polarity of the single cell.

14. The control method according to claim 13, wherein the extracting a side length, an orientation, and a polarity of the single cell based on the second image data comprises:
performing point cloud preprocessing on the second image data, to obtain second point cloud preprocessed data;
determining the side length of the single cell based on the second point cloud preprocessed data;
extracting a two-dimensional code point cloud from the second point cloud preprocessed data;
determining one end of the single cell close to a position of the two-dimensional code point cloud as a negative electrode of the single cell;
determining the orientation of the single cell based on the second point cloud preprocessed data; and
determining the orientation of the target column of cells as the orientation of the single cell when the orientation of the single cell is the same as the orientation of the target column of cells.

15. The control method according to claim 13, wherein the moving, by the robot, to the gripping position, adjusting a gripping angle based on the arrangement parameters, and controlling a cell gripping apparatus to firmly clamp the target column of cells, to complete gripping comprises:
moving, by the robot, to the gripping position;
determining, by the robot, the gripping angle based on the orientation and the polarity of the single cell, and performing adjustment to the gripping angle; and
controlling, by the robot based on the side length of the single cell, the cell gripping apparatus to firmly clamp the target column of cells, to complete gripping.

16. A cell gripping system, comprising: a robot, a stand camera, and a gripper camera, wherein the robot comprises a cell gripping apparatus, and the gripper camera is located on the cell gripping apparatus, wherein
the robot is configured to send a first photographing request to the stand camera;
the stand camera is configured to obtain, in response to the first photographing request, first image data containing to-be-gripped cells, determine, based on the first image data, a gripping position for a target column of cells among the to-be-gripped cells and a photographing position for the target column of cells, and send the gripping position and the photographing position to the robot;
the robot is configured to move to the photographing position and send a second photographing request to the gripper camera;
the gripper camera is configured to obtain second image data in response to the second photographing request, determine, based on the second image data, arrangement parameters for the target column of cells, and send the arrangement parameters to the robot; and
the robot is configured to move to the gripping position, adjust a gripping angle based on the arrangement parameters, and control a cell gripping apparatus to firmly clamp the target column of cells, to complete gripping.

17. The cell gripping system according to claim 16, wherein the system further comprises a controller, wherein
the controller is configured to send a gripping instruction to the robot in response to a received gripping operation; and
the robot is configured to send the first photographing request to the stand camera in response to the gripping instruction.

18. The cell gripping system according to claim 16 or 17, wherein the stand camera is specifically configured to:
photograph in response to the first photographing request, to obtain the first image data containing the to-be-gripped cells;
determine, based on the first image data, whether the target column of cells satisfies a grippable condition; and
determine, based on the first image data, a gripping position for the target column of cells and a photographing position for the target column of cells when the target column of cells satisfies the grippable condition, and send the gripping position and the photographing position to the robot.

19. The cell gripping system according to any one of claims 16 to 18, wherein comprising:
the robot is configured to send, after moving to the gripping position, adjusting the gripping angle based on the arrangement parameters, and controlling the cell gripping apparatus to firmly clamp the target column of cells, to complete gripping, a gripping complete instruction of the target column of cells to the stand camera; and
the stand camera is configured to:
determine, based on the first image data, a next target column of cells from the to-be-gripped cells in response to the gripping complete instruction, and determine a gripping position of the next target column of cells and a photographing position of the next target column of cells; and
send the gripping position of the next target column of cells and the photographing position of the next target column of cells to the robot, to complete a process of gripping the next target column of cells, until all columns of the to-be-gripped cells are gripped completely.

20. The cell gripping system according to any one of claims 16 to 19, wherein comprising:
the robot is configured to send, after moving to the gripping position, adjusting the gripping angle based on the arrangement parameters, and controlling the cell gripping apparatus to firmly clamp the target column of cells, to complete gripping, a first photographing request to the stand camera.

21. The cell gripping system according to any one of claims 16 to 20, wherein the stand camera is further configured to:
perform point cloud preprocessing on the first image data, to obtain first point cloud preprocessed data; and
determine whether the target column of cells satisfies the grippable condition according to the first point cloud preprocessed data.

22. The cell gripping system according to any one of claims 16 to 21, wherein when the photographing position is a photographing position of a single cell of the target column of cells, the gripper camera is further configured to:
extract a side length, an orientation, and a polarity of the single cell based on the second image data; and
send the side length, the orientation, and the polarity of the single cell to the robot, wherein
the arrangement parameters comprise: the side length, the orientation, and the polarity of the single cell.

23. The cell gripping system according to claim 22, wherein the robot is further configured to:
move to the gripping position;
determine the gripping angle based on the orientation and the polarity of the single cell, and perform adjustment to the gripping angle; and
control, based on the side length of the single cell, the cell gripping apparatus to firmly clamp the target column of cells, to complete gripping.

24. A production line module for cell gripping, comprising:
an operation region, wherein the operation region is used for carrying a cell of a to-be-gripped tray;
a cell gripping apparatus, configured to grip the cell at the operation region; and
a tray gripping apparatus, wherein after the cell gripping apparatus grips the cell, the tray gripping apparatus is at least configured to grip the tray.

25. The production line module for cell gripping according to claim 24, wherein the operation region comprises a first operation region and a second operation region, the first operation region is used for carrying the cell of the to-be-gripped tray, the cell gripping apparatus grips the cell in the first operation region, and the tray gripping apparatus grips the tray located in the first operation region and transports the tray to the second operation region.

26. The production line module for cell gripping according to claim 25, wherein the operation region comprises a first transport region and a second transport region, the first transport region is used for transporting the cell of the to-be-gripped tray to the first operation region, and the second transport region transports the tray in the second operation region to another position.

27. The production line module for cell gripping according to claim 24, further comprising: a stand fixed relative to the operation region, a stand camera disposed on the stand, and a first gripper camera disposed on the cell gripping apparatus, and/or a second gripper camera disposed on the tray gripping apparatus, wherein
the stand camera is configured to collect image information of the operation region, the first gripper camera is configured to collect image information of the cell gripping apparatus, and the second gripper camera is configured to collect image information of the tray gripping apparatus.

28. The production line module for cell gripping according to claim 24, wherein the cell gripping apparatus comprises:
a first rack;
a first clamping claw assembly, disposed on the first rack and having a first clamping member;
a second clamping claw assembly, disposed on the first rack and having a second clamping member, wherein the first clamping member and the second clamping member are disposed opposite to each other and at an interval;
a clamping drive part, configured to drive the first clamping member and/or the second clamping member to move, to cause the first clamping member and the second clamping member to move toward each other, wherein the first clamping member and the second clamping member collaborate with each other to clamp the cell; and
a first distance adjustment mechanism, disposed between the first rack and the first clamping claw assembly, and/or between the first rack and the second clamping claw assembly, and configured to drive the first clamping claw assembly and the second clamping claw assembly to move toward or away from each other relative to the first rack, to adjust a distance between the first clamping claw assembly and the second clamping claw assembly.

29. The production line module for cell gripping according to claim 28, wherein the first distance adjustment mechanism comprises a linear drive part, and the linear drive part is directly in transmission connection to the first clamping claw assembly and/or the second clamping claw assembly, to drive the first clamping claw assembly and the second clamping claw assembly to move toward or away from each other relative to the first rack.

30. The production line module for cell gripping according to claim 28, wherein the first distance adjustment mechanism comprises a rotation drive part and a transmission mechanism, the transmission mechanism has an input end in transmission connection to the rotation drive part and an output end in transmission connection to the first clamping claw assembly and/or the second clamping claw assembly, and the transmission mechanism is configured to convert a rotation torque of the rotation drive part into a linear motion, and transmit the linear motion to the first clamping claw assembly and/or the second clamping claw assembly.

31. The production line module for cell gripping according to claim 30, wherein the transmission mechanism comprises a transmission rod having a thread and a thread disposed on the first clamping claw assembly and/or the second clamping claw assembly, the transmission rod is fixedly connected to the rotation drive part, the thread of the transmission rod matches the thread on the first clamping claw assembly and/or the second clamping claw assembly, and the rotation drive part drives the transmission rod to rotate, to drive the first clamping claw assembly and the second clamping claw assembly to move toward or away from each other relative to the first rack.

32. The production line module for cell gripping according to claim 31, wherein two ends of the transmission rod respectively extend to the first clamping claw assembly and the second clamping claw assembly, the thread on the transmission rod comprises a first thread and a second thread that are respectively located in opposite directions on two sides, the thread of the first clamping claw assembly adapts to the first thread, and the thread of the second clamping claw assembly adapts to the second thread; and when the transmission rod rotates, the first thread drives the first clamping claw assembly to move, and the second thread drives the second clamping claw assembly to move, to cause the first clamping claw assembly and the second clamping claw assembly to move toward or away from each other relative to the first rack.

33. The production line module for cell gripping according to any one of claims 28 to 32, wherein the first distance adjustment mechanism further comprises a first guide rail assembly, and the first clamping claw assembly and/or the second clamping claw assembly is slidably connected to the first rack by using the first guide rail assembly.

34. The production line module for cell gripping according to claim 33, wherein the first guide rail assembly comprises a first guide rail fixed to the first rack, and a first slide block fixed to the first clamping claw assembly and/or the second clamping claw assembly, the first guide rail extends along a linear direction in which the first clamping claw assembly and the second clamping claw assembly move toward or away from each other relative to the first rack, and the first slide block is slidably connected to the first guide rail.

35. The production line module for cell gripping according to claim 28, wherein the first distance adjustment mechanism further comprises a distance measurement member, and the distance measurement member is configured to measure a displacement amount generated when the first clamping claw assembly and the second clamping claw assembly move toward or away from each other relative to the first rack.

36. The production line module for cell gripping according to claim 28, wherein the first clamping member and/or the second clamping member comprises a fixation bracket, an abutment block, and a deformation member, and the deformation member is located between the abutment block and the fixation bracket, to provide a buffer force pushing the abutment block and the fixation bracket apart.

37. The production line module for cell gripping according to claim 36, wherein the first clamping member and/or the second clamping member comprises a plurality of abutment blocks and a plurality of deformation members that are disposed corresponding to each other, and the plurality of abutment blocks is disposed abreast.

38. The production line module for cell gripping according to claim 37, wherein gaps between the plurality of abutment blocks are less than a width of a single cell and greater than or equal to an interference fit gap.

39. The production line module for cell gripping according to claim 37 or 38, wherein widths of the plurality of abutment blocks are less than or equal to the width of the single cell.

40. The production line module for cell gripping according to claim 25, wherein the tray gripping apparatus comprises:
a second rack;
a third clamping claw assembly, disposed on the second rack and having a third clamping member;
a fourth clamping claw assembly, disposed on the second rack and having a fourth clamping member, wherein the third clamping member and the fourth clamping member are disposed opposite to each other and at an interval;
a first drive mechanism, disposed between the second rack and the third clamping claw assembly and between the second rack and the fourth clamping claw assembly, and configured to drive the third clamping member and the fourth clamping member to simultaneously move between the first operation region and the second operation region;
a second drive mechanism, disposed between the first drive mechanism and the third clamping claw assembly and between the first drive mechanism and the fourth clamping claw assembly, and configured to drive the third clamping member and the fourth clamping member to simultaneously move toward or away from the tray; and
a second distance adjustment mechanism, disposed between the second drive mechanism and the third clamping claw assembly and/or at the second drive mechanism and the fourth clamping claw assembly, and configured to drive the third clamping member and the fourth clamping member to move toward or away from each other relative to the second drive mechanism, to adjust a distance between the third clamping member and the fourth clamping member, to cause the third clamping member and the fourth clamping member to collaborate with each other to grip the tray.

41. The production line module for cell gripping according to claim 40, wherein the first drive mechanism comprises a first drive member and a second guide rail assembly, the third clamping claw assembly and the fourth clamping claw assembly are both connected to the second guide rail assembly, the first drive member is connected to the second guide rail assembly, the first drive member drives the second guide rail assembly, and the second guide rail assembly simultaneously drives the third clamping member and the fourth clamping member to move between the first operation region and the second operation region.

42. The production line module for cell gripping according to claim 41, wherein the second guide rail assembly comprises a second guide rail disposed on the second rack and a second slide block disposed on the third clamping claw assembly and the fourth clamping claw assembly, the second guide rail extends along a direction in which the first operation region and the second operation region are disposed, the first drive member drives the second slide block, and the second slide block slides in the second guide rail.

43. The production line module for cell gripping according to any one of claims 40 to 42, wherein the second drive mechanism comprises a second drive member and a third guide rail assembly, both the third clamping claw assembly and the fourth clamping claw assembly are connected to the third guide rail assembly, the second drive member is connected to the third guide rail assembly, the second drive member drives the third guide rail assembly, and the third guide rail assembly drives the third clamping member and the fourth clamping member to simultaneously move toward or away from the tray.

44. The production line module for cell gripping according to claim 43, wherein the third guide rail assembly comprises a third guide rail disposed on the first drive mechanism and a third slide block disposed on the third clamping claw assembly and the fourth clamping claw assembly, the third guide rail extends in a direction moving toward or away from the tray, the second drive member drives the third slide block, and the third slide block slides in the third guide rail.

45. The production line module for cell gripping according to claim 40, wherein the second distance adjustment mechanism comprises a third drive member and a fourth guide rail assembly, the third clamping claw assembly and the fourth clamping claw assembly are connected to the fourth guide rail assembly, the third drive member is connected to the fourth guide rail assembly, the third drive member drives the fourth guide rail assembly, and the fourth guide rail assembly drives the third clamping member and the fourth clamping member to move toward or away from each other relative to the second drive mechanism.

46. The production line module for cell gripping according to claim 45, wherein the fourth guide rail assembly comprises a fourth guide rail disposed on the second drive mechanism and a fourth slide block disposed on the third clamping claw assembly and the fourth clamping claw assembly, the fourth guide rail extends along a direction in which the third clamping member and the fourth clamping member are disposed opposite to each other, the third drive member drives the fourth slide block, and the fourth slide block slides in the fourth guide rail.

47. The production line module for cell gripping according to claim 40, wherein two second distance adjustment mechanisms are provided, wherein one second distance adjustment mechanism is disposed between the second drive mechanism and the third clamping claw assembly, and the other second distance adjustment mechanism is disposed between the second drive mechanism and the fourth clamping claw assembly, to drive the third clamping member and the fourth clamping member respectively, to drive the third clamping member and the fourth clamping member to move toward or away from each other relative to the second drive mechanism.

48. The production line module for cell gripping according to claim 40, wherein a plurality of third clamping claw assemblies and a plurality of fourth clamping claw assemblies are provided, the plurality of third clamping claw assemblies and the plurality of third clamping claw assemblies are disposed in a one-to-one correspondence, and each of the third clamping claw assemblies and the fourth clamping claw assemblies is correspondingly provided with the second distance adjustment mechanism.
